# EUROPÄISCHE PATENTSCHRIFT

(11) **EP 2 745 521 B1**
(45) Veröffentlichungstag und Bekanntmachung des Hinweises auf die Patenterteilung: **07.10.2015**
(21) Anmeldenummer: 12781288.1
(22) Anmeldetag: 05.10.2012
(51) Int. Cl.: H04N 13/02, G02B 27/22

(54) **FILMAUFNAHMEVERFAHREN, WELCHES DIE HERSTELLUNG VON RÄUMLICH WIRKENDEN SZENERIEN ERMÖGLICHT**
FILM RECORDING METHOD THAT ENABLES THE PRODUCTION OF SCENERIES HAVING A THREE-DIMENSIONAL EFFECT
PROCÉDÉ D'ENREGISTREMENT DE FILMS PERMETTANT LA PRODUCTION DE SCÈNES AYANT UN EFFET 3D

(30) Priorität: 05.10.2011 DE 102011054189
(43) Veröffentlichungstag der Anmeldung: 25.06.2014
(73) Patentinhaber: Jonas, Till, 20144 Hamburg (DE)
(72) Erfinder: Jonas, Till, 20144 Hamburg (DE)
(74) Vertreter: Raffay & Fleck
(86) Internationale Anmeldenummer: PCT/EP2012/069691
(87) Internationale Veröffentlichungsnummer: WO 2013/050514

(56) Entgegenhaltungen:
- US-A1- 2002 009 300
- US-A1- 2010 188 483

## Beschreibung

Die vorliegende Erfindung betrifft ein Filmaufnahmeverfahren, welches die Herstellung von räumlich wirkenden Szenerien ermöglicht, sowie eine entsprechende Vorrichtung. Ferner auch eine Vorrichtung zum dreidimensionalen Verlagern des Konvergenzpunktes bei monografischen und multiskopischen Aufnahmen, wie auch eine entsprechende Vorrichtung zur verzerrungsfreien Stabilisierung des Strahlenganges aus unterschiedlichen Mikroperspektiven und ein Verfahren zum dreidimensionalen Rendern virtueller Anordnungen und schließlich auch ein Verfahren zur Wiedergabe entsprechender Bild-, insbesondere Video-, Film- oder digitaler Bewegtbild-Daten innerhalb monografischer Signal-Standards.

Aus dem Stand der Technik sind verschiedene Verfahren zur Erstellung dreidimensionalen Bild-, insbesondere Video- oder Filmmaterial, bekannt. So ist es beispielsweise bekannt, mit stereoskopischen Kameras, die zwei lichtempfindliche Elemente mit jeweils einem vorgelagerten Objektiv aufweisen und deren Objektive auf einen Konvergenzpunkt ausgerichtet sind, Bildmaterial aufzunehmen, das zur Erzeugung eines dreidimensionalen Eindrucks genutzt werden kann.

Des Weiteren sind aus der US 5,325,193 zahlreiche Anordnungen zur Aufnahme dreidimensionalen Bild-, insbesondere Video- oder Filmmaterials, bekannt.

So ist dort beispielsweise eine Ausführungsform angegeben, bei der eine einzige Kamera in kurzen Zeitabständen bei einer Ausrichtung auf einen Konvergenzpunkt hin und her bewegt wird, um so einen dreidimensionalen Eindruck auf Basis der dabei getätigten Aufnahmen zu vermitteln. Dabei wird eine mikröperspektivische Sequenz aufgenommen. Durch Umorientierung eines Teils der Verfahrvorrichtung kann die Kameraanordnung dabei auf einen anderen in derselben Ebene angeordneten Konvergenzpunkt ausgerichtet werden.

Des Weiteren ist aus der gleichen US 5,325,193 eine Anordnung bekannt, bei der mit zwei verkippbaren Spiegeln und einer Kamera die Möglichkeit geschaffen wird, Bild-, insbesondere Video- oder Filmmaterial, als mikroperspektivische Sequenz zu generieren, mit dem später ein dreidimensionaler Effekt vermittelt werden kann.

Des Weiteren sind beispielsweise aus der JP 08328172 einige mit Spiegeln und digitaler Weglängenkorrektur arbeitende Verfahren bekannt.

Des Weiteren ist aus US 2010/188483 eine stereoskopische Kamera mit nur einem Objektiv und einem Bildsensor bekannt. Der stereoskopische Effekt wird hier dadurch erzeugt, dass eine Linse im Objektiv bewegt wird, so dass ein Objekt aus zwei unterschiedlichen Perspektiven abgebildet wird.

Darüber hinaus ist aus der EP 0641132A1 oder Knauf, P., et al., Depth map creation and image-based rendering for advanced 3DTV services providing interoperability and scalability, Elsevier, ScienceDirect, Signal Processing: Image Communication 22, 2007, Seiten 217-234 bekannt, aus Aufnahmen mit stereoskopischen Kameras, die zwei lichtempfindliche Elemente mit jeweils einem vorgelagerten Objektiv aufweisen und deren Objektive auf einen Konvergenzpunkt ausgerichtet werden eine Tiefenverteilungskarte für jeden Frame zu errechnen und daraus unterschiedliche dreidimensionale Widergaben, angepasst unter anderem an den Betrachter, zu errechnen.

Die aus dem Stand der Technik bekannten Anordnungen weisen jedoch alle die Nachteile auf, dass entweder vergleichsweise große Massen bewegt werden müssen und/oder die optische Weglänge vom lichtempfindlichen Element zum Konvergenzpunkt bei den einzelnen Aufnahmen unterschiedlich ausfällt, was zu Bildverzerrungen, Lichtschwäche, rechnerischem Aufwand und/oder Bildunruhe führt und/oder eine Verlagerung des Konvergenzpunktes nur in sehr geringen Ausmaßen oder mit räumlichen Einschränkungen möglich ist.

Die Aufgabe der Erfindung ist es somit, ein Verfahren bzw. eine Vorrichtung und/oder Verwendung anzugeben, die es ermöglicht, auf einfache Weise zuverlässig Bild-, insbesondere Video- oder Filmmaterial, zu erstellen, bei dem der Konvergenzpunkt ohne nennenswerte Einschränkungen dreidimensional verlagert werden und die optische Weglänge vom lichtempfindlichen Element zum jeweiligen Konvergenzpunkt bei unterschiedlichen Perspektiven weitestgehend konstant gehalten werden kann.

Zwar ist es bekannt, dass durch bestimmte Bildabfolgen innerhalb bestimmter Zeiträume dem menschlichen Auge bestimmte Eindrücke suggeriert werden können, doch wurde dies bisher zur Produktion von dreidimensionalen Bild-, insbesondere Video- oder Filmmaterials, nicht entsprechend genutzt. Wird beispielsweise, einem oder den zwei menschlichen Auge(n) innerhalb einer Latenzzeit wiederholt eine erste Aufnahme aus einem ersten Blickwinkel und eine zweite Aufnahme aus einem zweiten Blickwinkel (erste und zweite Mikroperspektive) abwechselnd präsentiert, so setzt das menschliche Gehirn daraus einen dreidimensionalen Eindruck zusammen. Dies funktioniert sowohl, wenn die mikroperspektivische Sequenz beiden Augen gemeinsam präsentiert wird, als auch, wenn sie nur einem Auge präsentiert wird, sofern der Betrachter über eine Kenntnis der räumlichen Welt verfügt. Diese kann beispielsweise bei neuronalen Einschränkungen oder Unterentwicklungen fehlen.

Dies kann man sich zu nutze machen, um mit vergleichsweise wenig Aufwand, insbesondere auch bei der Wiedergabe des Bild-, insbesondere Video- oder Filmmaterials, einen dreidimensionalen Eindruck zu vermitteln. Dazu wird vorteilhafterweise eine mikroperspektivische Sequenz erzeugt, bei deren Präsentation ein dreidimensionaler Eindruck erzeugt werden kann. Dabei handelt es sich um eine sequentielle Abfolge von Frames, deren Mikroperspektiven, also Blickrichtungen, sich unterscheiden. Es können Abfolgen von sich abwechselnden zwei Mikroperspektiven oder komplexere Abfolgen gewählt werden.

Darüber hinaus bietet diese Methode die Möglichkeit, den Konvergenzpunkt, auf den das menschliche Auge ausgerichtet ist, bzw. auf den die aus unterschiedlichen Mikroperspektiven vorgenommenen Aufnahmen ausgerichtet sind, während der Aufnahme insbesondere auch räumlich, also nicht nur planar, schon bei der Aufnahme einfach und zuverlässig zu verlagern. Dadurch lassen sich spezielle Bildwirkungen erzielen und lässt sich insbesondere dem menschlichen Wahrnehmungsapparat ein gedanklicher Fokus vorschreiben, der narrativ bzw. szenisch umgesetzt werden kann. Je nach dem, wo dieser Konvergenzpunkt räumlich angesiedelt wird, bzw. wie er bewegt wird, insbesondere in Relation zu der ansonsten im Bild wahrzunehmenden Bewegung, wird der menschliche Wahrnehmungsapparat ganz unterschiedliche Eindrücke registrieren. So kann beispielsweise dem Betrachter der Eindruck vermittelt werden, er würde sich in der Szene selbst bewegen. Auch ist es möglich, seine Aufmerksamkeit auf bestimmte Punkte zu richten bzw. andere Bildbereiche in seiner Wahrnehmung zurückzudrängen. Dadurch lassen sich dramaturgische Schwerpunkte setzen und unterschiedliche Sinneswahrnehmungen verwirklichen.

Darüber hinaus weist ein solches Verfahren gegenüber stereoskopischen Verfahren den Vorteil auf, dass es in der Regel mit deutlich weniger Belichtung auskommt, also lichtempfindlicher ist. Des Weiteren ist auch das Abspielen ohne die Notwendigkeit einer 3D-Brille und ohne Modifikation der Abspielgeräte möglich. Ein einzelner Bildkanal, wie er bei klassischen Wiedergabemedien, wie DVD oder Blue Ray (ohne 3D), gängig ist, reicht aus, um einen dreidimensionalen Eindruck zu vermitteln. Indem die Abfolge der Bilder mit unterschiedlichen Mikroperspektiven entsprechend gewählt wird, kann ein dreidimensionaler Eindruck vermittelt werden. Voraussetzung hierfür ist eine verzerrungsfreie Darstellung der jeweiligen Mikroperspektiven zueinander.

Des Weiteren ist bei diesem Verfahren, das mit Hilfe von optischen Elementen wie z.B. reflektierenden oder teilreflektierenden Elementen, wie Spiegeln, Prismen oder refraktiven Elementen wie Linsen arbeitet, die zu bewegende Masse zur Umschaltung zwischen den einzelnen Mikroperspektiven im Vergleich zu bekannten Motion-Control-Techniken gering. Auch ist ihr apparativer Aufbau bzw. Arbeitsraum im Verhältnis wesentlich kleiner.

So kann die notwendige Technik in einen objektivartigen Aufsatz oder eine (tragbare) Kamera selbst integriert werden. Es ist nicht mehr notwendig zwei Kameras zu verwenden oder diese gegeneinander zu verschwenken. Vielmehr kann die Erfindung beispielsweise in einem Aufsatz realisiert werden, der beispielsweise über eine handelsübliche Objektivadaption oder eine entsprechende Verbindungsvorrichtung auf eine Kamera aufgesetzt werden kann. Auch kann, sofern gewünscht, auf Stative verzichtet werden.

Erfindungsgemäß ist es prinzipiell möglich, Fokus (Bildschärfe) und Konvergenzpunkt sowohl gemeinsam als auch separat zu verlagern.

Der Zeitraum, innerhalb derer zwei Mikroperspektiven, also Aufnahmen, aus unterschiedlichen Richtungen, in der Regel ausgerichtet auf einen gemeinsamen Konvergenzpunkt, wiedergegeben werden müssen, um den Eindruck der Dreidimensionalität schaffen zu können, hängt von weiteren Bildbedingungen, wie Bewegung im Bild und Bewegung der Kamera sowie Bildinhalt, z.B. den Kontrasten bzw. der Kontrastverteilung, ab. Er bewegt sich in der Regel zwischen 10 und 600 ms, insbesondere zwischen 80 und 350 ms. Diese Zeit ist jedoch auch vom einzelnen Betrachter abhängig.

Auch ist es möglich, nicht immer nur zwei Mikroperspektiven sich abwechseln zu lassen. Auch andere bzw. komplexere Abfolgen bzw. Übergänge und Mischungen sind denkbar. Zur Erzielung des dreidimensionalen Eindrucks kommt es lediglich darauf an, dass innerhalb der Latenzzeit die entsprechenden Mikroperspektiven vermittelt werden, so dass der menschliche Wahrnehmungsapparat einen dreidimensionalen Eindruck generieren kann.

Die Aufgabe wird somit gelöst durch ein Verfahren gemäß Anspruch 1 sowie einer Vorrichtung gemäß Anspruch 6 und ein Verfahren gemäß Anspruch 10 ferner auch eine Verwendung gemäß Anspruch 11 und ein Verfahren gemäß Anspruch 12 sowie eine Vorrichtung zur Verlagerung des Konvergenzpunktes und entsprechende Verfahren zur entsprechenden Wiedergabe des gewonnenen Bild-, insbesondere Video- oder Filmmaterials.

Die abhängigen Unteransprüche 2 bis 5 und 7 bis 9 und 13 geben vorteilhafte Weiterbildungen an. Die einzelnen Aspekte sind jeweils auf die unterschiedlichen Verfahren, Vorrichtungen und Verwendungen entsprechend übertragbar.

Ein erfindungsgemäßes Verfahren zum Aufnehmen von dreidimensionalen Objekten und Szenerien weist gemäß Anspruch 1 folgende Schritte auf:

Zunächst wird eine optische Kamera mit einem eine optische Achse aufweisenden Objektiv und einem in einem optischen Strahlengang hinter dem Objektiv angeordneten lichtempfindlichen Element zur Aufnahme von Bildern bereitgestellt.

Des Weiteren wird ein erstes den Strahlengang von einfallendem Licht ablenkendes Element, für die weitere und einfachere Erläuterung "Deflektor" genannt, und mindestens ein zweites den Strahlengang von einfallendem Licht ablenkendes Element, für die weitere und einfachere Erläuterung "Perspektor" genannt, bereitgestellt. Dabei sind Deflektor und/oder Perspektor zur Veränderung der Ablenkung des Lichts bewegbar. Der Deflektor und Perspektor können dabei sowohl innerhalb als auch außerhalb des Objektivs angeordnet sein.

Es werden der Deflektor und Perspektor so positioniert, dass von dem aufzunehmenden Objekt bzw. der aufzunehmenden Szenerie den Perspektor treffendes Licht von diesem so abgelenkt wird, dass es auf den Deflektor trifft und von dort in Richtung des lichtempfindlichen Elementes und zu diesem hin abgelenkt wird (erste Perspektive). Zur Positionierung müssen im Zweifel weder Deflektor noch Perspektor zunächst bewegt werden. Es können auch ihre Ausgangspositionen verwendet werden, sofern sie die genannten Bedingungen erfüllen. Sind mehrere Perspektoren bereit gehalten, so wird in der Regel lediglich ein Perspektor zur Generierung jeweils einer Perspektive verwendet. Bei verschiedenen (Mikro-)Perspektiven oder wiederholter Aufnahme aus einer (Mikro-)Perspektive können unterschiedliche Perspektoren entsprechend positioniert und eingesetzt werden.

Sodann wird die erste Aufnahme mit dem lichtempfindlichen Element gefertigt. Diese wird somit aus der ersten Mikroperspektive aufgenommen. Darauf werden der Deflektor und/oder Perspektor so positioniert, dass Lichtstrahlen von dem aufzunehmenden Objekt bzw. der aufzunehmenden Szenerie auf den Perspektor treffen und von ihm so abgelenkt werden, dass sie auf den Deflektor treffen und von dort in Richtung des lichtempfindlichen Elementes und zu diesem hin abgelenkt werden (zweite Mikroperspektive). Zu dieser Positionierung wird in der Regel mindestens ein Element, in der Regel aber zumindest der Deflektor, entsprechend repositioniert. Diese Positionierung kann durch Verfahren und zusätzliches Verkippen, öder Verschwenken erfolgen. Des Weiteren können zur Aufnahme der zweiten Mikroperspektive der gleiche Perspektor und Deflektor zusammenwirken. Alternativ kann auch ein anderer Perspektor mit dem Deflektor zusammenwirken, um den optischen Strahlengang für die zweite Mikroperspektive auszuprägen.

Daraufhin wird eine zweite Aufnahme auf dem lichtempfindlichen Element gefertigt.

Dabei handelt es sich bei der zweiten Aufnahme nicht zwangsläufig um die direkt auf die erste Aufnahme folgende Aufnahme. Die zweite Aufnahme ist vielmehr dadurch geprägt, dass sie aus der zweiten Mikroperspektive erfolgt. Dazwischen können weitere Aufnahmen durchgeführt werden, beispielsweise um ein Überblenden zwischen der ersten Mikroperspektive und der zweiten Mikroperspektive, also der ersten Aufnahme und der zweiten Aufnahme zu ermöglichen. Das Positionieren von Deflektor und/oder Perspektor zur zweiten Aufnahme, also zur Ausprägung des optischen Weges für die zweite Mikroperspektive, hat derart zu erfolgen, dass bei der ersten und der zweiten Aufnahme von dem aufzunehmenden Objekt bzw. der aufzunehmenden Szenerie von den jeweiligen Objekten in verschiedene Richtungen (Mikroperspektiven) abgestrahltes Licht von dem Perspektor auf den Deflektor umgelenkt und von Letzterem zu dem lichtempfindlichen Element hin abgelenkt wird, wobei die jeweils durch Deflektor und Perspektor bei der ersten und der zweiten Aufnahme abgelenkten optischen Achsen eine von dem lichtempfindlichen Element aus gesehen vor dem Perspektor gelegenen ersten Schnittpunkt (ersten Konvergenzpunkt) aufweisen.

Erste und zweite Aufnahme weisen also unterschiedliche Mikroperspektiven auf. Das bedeutet, das von einem in beiden Aufnahmen sichtbarem und ruhendem Objektpunkt aus in der ersten Aufnahme Licht aufgenommen wird, das in eine erste Richtung abgestrahlt wird und in der zweiten Aufnahme von diesem Objektpunkt Licht aufgenommen wird, das in eine andere als die erste Richtung abgestrahlt wird.

Diesbezüglich ist eine Betrachtung jedes einzelnen ruhenden Bildpunktes notwendig. Denn in jeder der Aufnahmen wird von unterschiedlichen Objektpunkten Licht aufgenommen, dass in unterschiedliche Richtungen abgestrahlt wird. Je weiter die unterschiedlichen Objektpunkte voneinander entfernt liegen und je dichter die Linse bzw. Deflektor und Perspektor an diesen Objektpunkten liegt, desto größer wird die Differenz der Richtungen der aufgenommenen Lichtstrahlen sein. Nur bei einem näherungsweise unendlichen Abstand werden alle in einer Aufnahme festgehaltenen Lichtstrahlen näherungsweise die gleiche Richtung aufweisen.

Auf der anderen Seite können in der ersten Aufnahme durchaus Lichtstrahlen mit Richtungen aufgenommen werden, aus denen auch in der zweiten Aufnahme Lichtstrahlen aufgenommen werden, dann aber von anderen ruhenden oder in der Zwischenzeit entsprechend bewegten Objektpunkten.

All diese Betrachtungen der Richtungen gehen von ruhenden Objektpunkten und ruhender Kamera (Objektiv und lichtempfindliches Element) aus. Sind diese Bedingungen nicht erfüllt, wird die Analyse ungleich komplexer, weil bei der Betrachtung die zwischen der ersten und zweiten Aufnahme erfolgten Bewegungen mit berücksichtigt werden müssen. In solchen Fällen (bewegten Objekten und/oder bewegter Kamera) kann es durchaus vorkommen, dass von einem Objektpunkt in eine Richtung ausgehendes Licht sowohl in der ersten als auch in der zweiten Aufnahme aufgenommen wird.

Bei einem gemeinsamen Konvergenzpunkt der ersten und zweiten Mikroperspektive sind die Mikroperspektiven also dennoch unterschiedlich und werden aus unterschiedlichen Richtungen, Perspektiven, aufgenommen. Dadurch ist es möglich, später einen dreidimensionalen Eindruck zu vermitteln. Jedoch ist es nicht unbedingt immer notwendig, dass bei allen Aufnahmen jeweils ein Paar aus zwei Aufnahmen mit gemeinsamen Konvergenzpunkt aber unterschiedlichen Mikroperspektiven gefertigt wird. Vielmehr ist es, insbesondere auch bei Verlagerung des Konvergenzpunktes möglich, dass der Konvergenzpunkt zwischen den einzelnen Aufnahmen aus unterschiedlichen Perspektiven langsam verlagert wird.

Auch ist eine Abfolge von Aufnahmen denkbar, die bei einer Wiedergabe eine Einführung in eine Szene oder eine Einstellung ermöglichten (Trainings-Sequenz). So kann eine Abfolge beispielsweise auch mit nur einer Folge von Aufnahmen aus einer ersten Mikroperspektive beginnen und sich daran mehrere Abfolgen von ersten und zweiten Mikroperspektiven mit sich verändernder Exzentrizität und Abfolge anschließen. Dies kann beispielsweise auch bei jeden Perspektiven, Szenen und/oder Konvergenzpunktveränderungen durchgeführt werden. So kann bei der Widergabe der Betrachter an die Art der Wiedergabe, die Szene und/oder den Konvergenzpunkt gewöhnt werden. Auch lassen sich dadurch besondere Effekte erzielen. So kann beispielsweise ein fließender Übergang zwischen zweidimensionaler und dreidimensionaler Darstellung erreicht werden. Vorteilhafterweise zeigen die ersten Aufnahmen dabei vergleichsweise wenig Bewegung in der Szene.

Das Verfahren ist dabei dadurch gekennzeichnet, dass ein erstes der Elemente Perspektor und Deflektor zum Positionieren in mindestens eine Richtung, insbesondere zwei oder drei Raumrichtungen, entlang einer näherungsweise elliptischen Bahn und/oder ellipsoiden Fläche oder einer Tangente an einer solchen Fläche und/oder Bahn bewegt als auch um mindestens eine Achse, insbesondere zwei, auf einer ellipsoiden Tangente werden mindesten drei, Achsen rotiert, wobei das zweite der Elemente Perspektor und Deflektor in einem ersten Brennpunkt der elliptischen Bahn und/oder ellipsoiden Fläche angeordnet ist und der Konvergenzpunkt in dem anderen Brennpunkt liegt. Besonders vorteilhaft ist es, den Perspektor in drei Raumrichtungen zu bewegen und um drei Achsen zu rotieren und den Deflektor um zwei Achsen zu rotieren.

Durch ein solches Verfahren des Deflektors und/oder Perspektors bzw. Verlagern in mindestens eine Richtung kann gemeinsam mit einer Verkippung bzw. Rotation um mindestens eine Achse bei den unterschiedlichen Mikroperspektiven eine konstante optische Weglänge zu jeweils einem vorgegebenen Konvergenzpunkt gewährleistet werden. Dabei kann dies auch für unterschiedliche Konvergenzpunkte gewährleistet werden, wobei dann in der Regel die optische Weglänge zu den einzelnen Konvergenzpunkten unterschiedlich ausfallen wird.

Auch ist es prinzipiell denkbar, alle in dieser Anmeldung geschilderten Vorrichtungen und Verfahren so auszuführen, dass der Perspektor, insbesondere im Brennpunkt einer Ellipse oder eines Ellipsoiden ruht und Deflektor und lichtempfindliches Element bewegt werden, insbesondere der Deflektor auf dem Umfang der Ellipse oder der Fläche des Ellipsoiden.

Wenn der Perspektor quer der Richtung der Achse zwischen den Brennpunkten der Ellipse auf der Ellipse und zu ihr tangential bewegt wird, rotiert zwangsläufig die Bildfläche am lichtempfindlichen Element um die Bildmitte. Man kann das lichtempfindliche Element entsprechend gegenrotieren oder eine optische Bildgegendrehung, beispielsweise über Prismen, wie z. B. aus der WO 2001/090786 A2 bekannt, verwenden oder die Bildframes per Software rotativ ausgleichen: Letzteres ist zwar preiswert, hat aber drei Nachteile. So kostet es Zeit, verschlechtert je nach Algorithmus die Bildschärfe und nimmt dem Bild Auflösung, weil gedreht und beschnitten werden muss. Andererseits liegt der Winkel der Verkippung, üblicherweise bei nur ca. 5-10 Grad, sodass diese Nachteile nicht sehr groß werden. Das Vorsehen einer Rotationsvorrichtung des lichtempfindlichen Elements hingegen ist aufwendiger, dafür jedoch prinzipiell die vorteilhafteste Lösung, da eine Lösung über eine optische Bildgegendrehung Lichtintensität kostet und Abbildungsfehler mit sich bringt. Vorteilhafterweise werden das erste und das zweite Bild innerhalb der Latenzzeit des menschlichen optischen Wahrnehmungsapparates aufgenommen. Dies ist insbesondere dann vorteilhaft, wenn Bewegungen in ihrer tatsächlichen Zeitabfolge wiedergegeben werden sollen. Insbesondere bei Zeitraffer oder Zeitlupeneffekten ist eine solche Aufnahme jedoch keineswegs erforderlich bzw. sinnvoll. Vielmehr sind die Aufnahmen in einer solchen Abfolge zu fertigen, dass bei der Wiedergabe entsprechend viel Bildmaterial zur Abfolge der Mikroperspektiven innerhalb der Latenzzeit vorhanden ist. Dies hängt von zahlreichen Umständen, insbesondere auch der beabsichtigten zeitlichen Wiedergabe der aufgenommenen Bewegungen bzw. Stillleben ab.

Wie schon ausgeführt, ermöglicht ein solches Verfahren die optische Weglänge zwischen unterschiedlichen Aufnahmen aus unterschiedlichen Mikroperspektiven zu einem Konvergenzpunkt konstant zu halten. Unter einer solchen Konstanthaltung ist nicht notwendigerweise eine absolute Konstanz zu verstehen. Insbesondere kann auch zur Vereinbarung der technischen Mittel zum Bewegen von Deflektor und/oder Perspektor eine Annäherung an eine konstante optische Weglänge erfolgen. Dabei hat sich herausgestellt, dass das menschliche Auge eine Abweichung von nicht mehr als 3%, insbesondere von nicht mehr als 1%, verzeiht, ohne dass der Eindruck einer dreidimensionalen unverzerrten Szene gestört wird. Bei größeren Abweichungen können je nach Bildinhalt Verzerrungen auftreten, die den dreidimensionalen Eindruck bzw. das bildliche Erlebnis verschlechtern.

Mit Vorteil werden als Perspektor und/oder Deflektor mindestens ein Spiegel, mindestens eine Linse und/oder mindestens ein Prisma verwendet. Vorteilhafterweise bestehen Perspektor und/oder Deflektor bzw. ihre optischen Elemente im Wesentlichen aus (teil)reflektierenden Elementen wie, Spiegeln, Linsen und/oder refraktiven Elementen, wie Prismen. Durch die Wahl derartiger Elemente kann nicht nur der notwendige Arbeitsraum, sondern auch die zu bewegende Masse verhältnismäßig gering gehalten werden, so dass ohne großen Aufwand entsprechend schnelle Abfolgen verschiedener Mikroperspektiven möglich sind. Die Umstellung zwischen den Mikroperspektiven kann dabei insbesondere innerhalb einer Austastlücke zwischen zwei Belichtungen erfolgen.

In einer Ausführungsform ist der Perspektor als Anordnung einer Mehrzahl von Linsen, Prismen und/oder Spiegeln ausgeführt. Dadurch kann die notwendige Verfahrarbeit weiter reduziert werden, da durch Zusammenwirken des Deflektors mit unterschiedlichen Perspektoren bzw. mit unterschiedlichen Linsen, Spiegeln und/oder Prismen des Perspektors, durch geringes Bewegen des Deflektors, mit jeweils einem unterschiedlichen Perspektor und unterschiedlichen optischen Wegen gearbeitet werden kann.

Eine Auswahl der unterschiedlichen optischen Elemente des Perspektors oder der Perspektoren erfolgt beispielsweise durch Verfahren und/oder Verkippen oder Rotieren des Deflektors.

Mit Vorteil können Deflektor und/oder Perspektor zwischen Objektiv und Objekt bzw. Szenerie angeordnet sein. Denkbar ist jedoch auch eine Anordnung, insbesondere des Deflektors, innerhalb des Objektivs. Zur Realisierung möglichst kleiner Verfahrwege ist es jedoch auch möglich, Deflektor und/oder Perspektor zwischen lichtempfindlichem Element und Objektiv bzw. im Objektiv anzuordnen. Dies erhöht jedoch die Anforderungen an das Objektiv.

Mit Vorteil erfolgt das Positionieren des Perspektors durch Verfahren entlang einer näherungsweise elliptischen Bahn oder ellipsoiden Fläche oder einer Tangente an einer solchen Bahn oder Fläche und Verschwenken und/oder Verkippen. Dabei befindet sich der Deflektor in einem ersten Brennpunkt der elliptischen Bahn und/oder ellipsoiden Fläche und liegt der Konvergenzpunkt im anderen Brennpunkt. Durch solche Verfahren, insbesondere auf einer elliptischen Bahn oder ellipsoiden Fläche kann eine konstante optische Weglänge zwischen den einzelnen Mikroperspektiven sicher gewährleistet werden. Näherungsweise ist dies jedoch auch, insbesondere im Rahmen des Anspruchs 2, möglich, wenn eine Verlagerung entlang einer Tangente an einer solchen elliptischen Bahn bzw. elliptischen Fläche erfolgt. Dies ist technisch einfach zu bewerkstelligen und je nach Anordnung in der Regel auch ohne Verzerrungen möglich.

Mit einer häufig ausreichenden Genauigkeit kann eine Verlagerung auch mit Abweichungen selbst von der Tangente erfolgen ohne nennenswerte Einschränkungen der Qualität der multiperspektivischen Sequenz hinnehmen zu müssen. Dabei werden die Abweichungen der optischen Weglängen zwischen erster und zweiter Mikroperspektive vorteilhafterweise kleiner als 5% gehalten.

Je nachdem, welche Ziele verfolgt werden, stellen sich bei Verwendung von Spiegeln als Perspektor und Deflektor verschiedene Formen von Perspektor und Deflektor als besonders geeignet dar. Soll die Masse des Deflektors reduziert werden, ist eine gleichschenklige trapezförmig Ausbildung mit parallelen Grundseiten, die eine Symmetrieachse auf der Mittelsenkrechten auf den Grundseiten aufweist, ausgehend von den maximalen Projektionen des Bildformats, ideal. Insbesondere kann eine trapezförmige Ausbildung mit abgerundeten Ecken von Vorteil sein, um die Fläche bei Verkippungen in beide Achsen optimal auszunutzen. Des Weiteren ist es vorteilhaft, den Drehpunkt, um den der Deflektor verkippt wird, in den Schnittpunkt der Diagonalen durch das (abgerundete) Trapez zu legen, um seine Fläche bei möglichst geringen Bewegungen optimal auszunutzen. In diesem Fall liegt der Drehpunkt jedoch nicht im Schwerpunkt, wenn die Dicke und Dichte des Perspektors homogen ist. Prinzipiell ist es jedoch vorteilhaft, den Drehpunkt mit dem Schwerpunkt in Deckung zu bringen, um bei sehr dynamischen Bewegungen keine ungleichmäßigen Dämpfungskurven erzeugen zu müssen, um schnell verwacklungsfreie Bilder aufnehmen zu können. Um dies zu erreichen, können Zusatzgewichte und/oder inhomogene Dickenund/oder Dichtenverteilungen gewählt werden. In diesen Absatz beschriebenen Fällen eignet sich für den Perspektor besonders eine rechteckige Form mit dem Seitenverhältnis des Bildformats, und einer Größe entsprechend der maximalen Entfernung zum Deflektor und der Größe des auf den Perspektor projizierten Bildes entsprechend dem Öffnungswinkel.

Im Falle eines derartigen, formatangepassten Perspektors wird ein Rotationsausgleich des Perspektors zwingend nötig. Es sind dann also drei Rotationsachsen vorzusehen. Wenn der Spiegel hingegen ausreichend groß und beispielsweise rund ist, reichen zwei Rotationsachsen aus.

Mit Vorteil wird nach Erstellen von mindestens einer ersten und einer zweiten Aufnahme eine Wiederholung der Schritte zur Aufnahme der ersten und zweiten Aufnahme durchgeführt, wobei die optische Achse nach der Ablenkung durch Deflektor und Perspektor bei den dann angefertigten ersten und zweiten Aufnahme einen zweiten Schnittpunkt (zweiter Konvergenzpunkt) aufweisen, der in seiner Lage relativ zu dem lichtempfindlichen Element nicht mit dem ersten Schnittpunkt (erster Konvergenzpunkt) übereinstimmt.

Dabei wird wieder vorteilhafterweise die optische Weglänge von dem lichtempfindlichen Element zu einem Konvergenzpunkt, hier also zum zweiten Konvergenzpunkt bei den Aufnahmen einzelner Mikroperspektiven zum jeweiligen Konvergenzpunkt, hier also zweiten Konvergenzpunkt, konstant gehalten. Insbesondere wird dabei die optische Weglänge zwischen den einzelnen Mikroperspektiven zu einem Konvergenzpunkt nicht um mehr als 3%, insbesondere nicht um mehr als 1%, verändert.

Vorteilhaft ist es bei einem solchen Verfahren, bei dem der Konvergenzpunkt verlagert wird, zur Positionierung des Deflektors und/oder Perspektors die elliptische Bahn bzw. den Ellipsoiden, entlang der bzw. entlang dem bzw. entlang einer entsprechenden Tangente der Perspektor zur Aufnahme der einzelnen Mikroperspektiven verfahren wird, entsprechend der Verlagerung des Konvergenzpunktes zu verändern. Somit wird bei Verlagerung des Konvergenzpunktes insbesondere auch die Verfahrbahn entsprechend verlagert, so dass Deflektor und Konvergenzpunkt in den Brennpunkten des entsprechenden Ellipsoiden bzw. der elliptischen Bahn liegen. Durch ein solches Verfahren ist die Verlagerung des Konvergenzpunktes unabhängig oder auch zusammen mit dem Fokus möglich, ohne dass dabei der dreidimensionale Eindruck gestört wird oder Verzerrungen auftreten.

Eine Verlagerung des Konvergenzpunktes ist dabei nicht nur innerhalb einer Ebene möglich. Vielmehr kann der Konvergenzpunkt weitgehend beliebig im Raum dreidimensional verlagert werden. Dabei kann der Konvergenzpunkt auch insbesondere unabhängig vom Bildausschnitt, der Bildmitte bzw. Ausrichtung der Aufnahmevorrichtung und/oder der Bildschärfe weitgehend frei verlagert werden. Dies ist beispielsweise durch entsprechendes Rotieren des Perspektors um drei Achsen möglich. Durch ein laterales Verfahren des Perspektors, insbesondere auf einer elliptischen Bahn, einer ellipsoiden Fläche oder einer entsprechenden Tangente, und dadurch insbesondere Veränderung des Abstandes zwischen Perspektor und Deflektor und Perspektor und Konvergenzpunkt, kann die optische Weglänge zwischen den einzelnen Mikroperspektiven konstant gehalten werden.

Erste und zweite Mikroperspektive können eine gewisse Exzentrizität, also einen gewissen zwischen den optischen Achsen ihrer Aufnahmeanordnungen ausgeprägten Winkel, aufweisen. Diese Exzentrizität kann sich an der Exzentrizität zwischen linkem und rechtem menschlichem Auge bei Betrachtung mit gleichem Abstand der Augen zur Szenerie wie Objektiv zur Szenerie orientieren, von dieser also bis zu 50%, insbesondere bis zu 20% abweichen.

Gelöst wird die Aufgabe auch durch eine Vorrichtung gemäß Anspruch 6 zur Aufnahme von dreidimensionalen Objekten und Szenerien. Dabei weist die Vorrichtung eine optische Kamera mit einem eine optische Achse aufweisenden Objektiv und ein in einem optischen Strahlengang hinter dem Objektiv angeordnetes lichtempfindliches Element zur Aufnahme von Bildern auf. Des Weiteren beinhaltet die Vorrichtung mindestens ein erstes den Strahlengang von einfallendem Licht ablenkendes Element (Deflektor) und mindestens ein zweites den Strahlengang von einfallendem Licht ablenkendes Element (Perspektor), wobei der Deflektor und/oder der mindestens eine Perspektor zur Veränderung der Ablenkung des Lichtes mit jeweils mindestens einer Bewegungsvorrichtung gekoppelt sind. Darunter ist auch eine gemeinsame Bewegungsvorrichtung für den Deflektor und den mindestens einen Perspektor zu verstehen, die Deflektor und Perspektor separat bewegen kann. Auch kann die Bewegungsvorrichtung in mehrere Bewegungsvorrichtungen zergliedert sein, so dass beispielsweise jeder Perspektor eine eigene Bewegungsvorrichtung aufweist, wobei diese beispielsweise auf einer gemeinsamen Verfahrbahn angeordnet sein können.

Dabei sind die Bewegungsvorrichtungen so eingerichtet, dass der Deflektor und der Perspektor in einer ersten Anordnung so positionierbar sind, dass von einem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird. Eine solche Einrichtung der Bewegungsvorrichtung ist auf zahlreiche Arten und Weisen möglich. So können diese beispielsweise an Roboterarmen gelagert sein oder mit entsprechenden Verkipp- bzw. Verschwenkmechanismen auf Schienen oder mit Hilfe eines Hexapod, der eine parallelkinematische Positionierung mit sechs Freiheitsgraden ermöglicht, beweglich gelagert sein. In einer solchen Anordnung ist die Aufnahme aus einer ersten Mikroperspektive möglich. Des Weiteren sind die Bewegungsvorrichtungen so eingerichtet, dass der Deflektor und der Perspektor in einer zweiten Anordnung so positionierbar sind, dass von dem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird, wobei die Bewegungsvorrichtungen so eingerichtet sind, dass Deflektor und Perspektor so positionierbar sind, dass bei der ersten und der zweiten Anordnung von dem aufzunehmenden Objekt bzw. der aufzunehmenden Szenerie von den jeweiligen Objekten in verschiedene Richtungen (Mikroperspektiven) abgestrahltes Licht von dem Perspektor auf den Deflektor umgelenkt und von letztem zu den lichtempfindlichen Elementen abgelenkt wird, wobei die jeweils durch den Deflektor und Perspektor bei der ersten und der zweiten Anordnung abgelenkten optischen Achsen einen von dem lichtempfindlichen Element aus vor dem Perspektor gelegenen ersten Schnittpunkt (erster Konvergenzpunkt) aufweisen. Dadurch ist eine Aufnahme aus einer zweiten Mikroperspektive mit übereinstimmendem Konvergenzpunkt zwischen erster und zweiter Mikroperspektive möglich.

Dabei ist die Vorrichtung dadurch gekennzeichnet, dass die Bewegungsvorrichtungen so eingerichtet sind, dass ein erstes der Elemente Perspektor und Deflektor zum Positionieren in der ersten und der zweiten Anordnung in mindestens eine Richtung, insbesondere zwei oder drei Raumrichtungen, entlang einer näherungsweise elliptischen Bahn und/oder ellipsoiden Fläche oder einer Tangente an einer solchen Fläche und/oder Bahn bewegt, als auch um mindestens eine Achse, insbesondere zwei Achsen, rotiert werden kann, wobei das zweite der Elemente Perspektor und Deflektor in einem ersten Brennpunkt der elliptischen Bahn und/oder ellipsoiden Fläche angeordnet ist und der Konvergenzpunkt in dem anderen Brennpunkt liegt.

Bei einer solchen gezielten Verlagerung des Perspektors bzw. Positionierung des Deflektors beziehen sich diese Angaben vorteilhafterweise immer auf den optischen Zentralpunkt bzw. Mittelpunkt der aktiven Fläche.

Durch eine solche Vorrichtung kann beispielsweise das Verfahren gemäß Anspruch 1 bzw. der Unteransprüche 1 bis 5 realisiert werden. Vorteilhafterweise sind die Bewegungseinrichtungen dabei so eingerichtet, dass die Positionierung in der ersten und der zweiten Anordnung so erfolgen kann, dass die optische Weglänge von dem ersten Konvergenzpunkt zum lichtempfindlichen Element der ersten Anordnung und der zweiten Anordnung näherungsweise gleich sind, insbesondere nicht mehr als 3%, insbesondere nicht mehr als 1%, schwankt.

Die Korrektur der Bilddrehung am lichtempfindlichen Element, wie sie oben beschrieben wurde, kann auch hier durch vorsehen einer Rotationsvorrichtung des lichtempfindlichen Elements, einer Software gestützten Korrektur oder einer Ausgleichsoptik durchgeführt werden.

Mit Vorteil weist die Vorrichtung eine Steuerung zur Positionierung von Deflektor und Perspektor bzw. deren Bewegungsvorrichtungen sowie vorteilhafterweise zur Auslösung von entsprechenden Aufnahmen auf. Eine solche Vorrichtung kann insbesondere dazu eingerichtet sein, die Bewegungsvorrichtungen so anzusteuern, dass die optische Weglänge bei einzelnen Mikroaufnahmen weitestgehend konstant, insbesondere nicht mehr als 3%, insbesondere nicht mehr als 1%, schwankt. Eine solche Vorrichtung kann des Weiteren vorteilhafterweise mit Eingabevorrichtungen zur Konfiguration der einzelnen Mikroperspektiven und insbesondere auch zur Steuerung der Lage bzw. der Verlegung des Konvergenzpunktes ausgestattet sein. So ist es beispielsweise denkbar, die Exzentrizität der Mikroperspektiven vorzugeben. Auch können weitere Vorgaben, wie die Anzahl der aus einzelnen Mikroperspektiven gefertigten Aufnahmen oder deren Abfolge (Fahrprofile) eingebbar sein. Darüber hinaus kann die Vorrichtung beispielsweise eine Eingabevorrichtung, beispielsweise einen Joystick, einen Touchscreen oder ähnliches, aufweisen um den Konvergenzpunkt im Raum zu verlagern. Dazu kann die Vorrichtung beispielsweise auch mit der Fokussierungsvorrichtung gekoppelt sein, so dass sowohl Fokuspunkt (Bildschärfe) als auch Konvergenzpunkt gemeinsam oder separat steuer- bzw. verfahrbar sind. Des Weiteren kann die Steuerung vorteilhafterweise mit einem Lagesensor ausgestattet sein, der Kamerabewegungen erfasst, um diese auf die Berechnungen der Konvergenzpunkte einwirken zu lassen. Des Weiteren kann die Steuerung vorteilhafterweise auch mit der Auslösesteuerung für das lichtempfindliche Element sowie der Steuerung für das lichtempfindliche Element an sich zur Einstellung beispielsweise der Lichtempfindlichkeit und ähnlichem verbunden sein. Darüber hinaus kann die Steuerung auch mit weiteren Steuerungen der Aufnahmevorrichtung an sich gekoppelt sein bzw. solche Steuerungen integriert aufweisen.

Mit Vorteil können Perspektor und/oder Deflektor vom lichtempfindlichen Element aus gesehen hinter dem Objektiv angeordnet sein. Eine Anordnung von Perspektor und/oder Deflektor innerhalb bzw. zwischen Objektiv und lichtempfindlichem Element ist jedoch ebenfalls denkbar. Eine Anordnung eines oder beider der Elemente Perspektor und Deflektor innerhalb des Objektivs oder zwischen lichtempfindlichem Element und Objekt erhöht die Anforderungen an das Objektiv, reduziert jedoch den Verfahrbereich der entsprechend platzierten Elemente Deflektor und/oder Perspektor.

Vorteilhafterweise wird die Bewegungsvorrichtung zum dreidimensionalen Verkippen des Deflektors und/oder Perspektors um einen Punkt, insbesondere Brennpunkt, des Deflektors bzw. Perspektors bzw. um den optischen Mittelpunkt des Deflektors bzw. Perspektors eingerichtet. Eine solche Einrichtung mindestens einer Bewegungsvorrichtung hat den Vorteil, dass eine Verkippung um den optischen Zentralpunkt des jeweiligen Elementes erfolgen kann. Dies erhöht die Genauigkeit und verringert die Verzerrungen. Die Bewegungsvorrichtung ist dabei jedoch entsprechend auszurüsten, so dass die Verkippung beispielsweise nicht um einen Punkt hinter der aktiven Fläche bzw. hinter dem optischen Zentralpunkt bzw. hinter dem Mittelpunkt erfolgt. Entsprechende Ausgleichsmechaniken können durch den Fachmann vorgesehen werden. Bei computergesteuerten vergleichsweise frei bewegbaren Bewegungsvorrichtungen kann ein Ausgleich jedoch auch durch entsprechende Programmierung erfolgen.

Mit besonderem Vorteil weisen Perspektor und/oder Deflektor mindestens einen Spiegel, eine Linse oder ein Prisma auf. Mit besonderem Vorteil weist der Perspektor eine Anordnung von einer Mehrzahl von Linsen, Spiegeln und/oder Prismen auf. Dadurch lassen sich die notwendigen Bewegungen minimieren.

Mit Vorteil sind die Bewegungsvorrichtungen so eingerichtet, dass der Perspektor entlang einer näherungsweise elliptischen Bahn und/oder ellipsoiden Fläche oder einer Tangente an einer solchen Fläche und/oder Bahn verfahrbar und verschwenkbar und/oder verkippbar ist, wobei der Deflektor in einem ersten Brennpunkt der elliptischen Bahn und der ellipsoiden Fläche angeordnet ist und der Konvergenzpunkt in dem anderen Brennpunkt liegt.

Bei einer solchen gezielten Verlagerung des Perspektors bzw. Positionierung des Deflektors beziehen sich diese Angaben vorteilhafterweise immer auf den optischen Zentralpunkt bzw. Mittelpunkt der aktiven Fläche.

Die Bewegungsvorrichtungen lassen sich auf zahlreiche Arten dementsprechend einrichten. Beispielsweise kann eine Schiene vorgesehen sein, die bewegbar ist und die eine Tangente bzw. eine elliptische Bahn bzw. einen Teil einer elliptischen Bahn abbildet und auf der der Perspektor verfahrbar ist und die wiederum selbst verfahrbar bzw. verschwenkbar angeordnet ist. Bezüglich des Deflektors reicht es im Zweifelsfall aus, wenn dieser ortsfest und um ein bis zwei Achsen drehbar angeordnet ist. In diesem Fall bleibt ein Brennpunkt der Ellipse bzw. des Ellipsoids fix, der zweite, der den Konvergenzpunkt darstellt, kann entsprechend durch die Veränderung der Bahn bzw. Fläche oder Tangente verändert werden.

Mit Vorteil sind die Bewegungsvorrichtungen so eingerichtet, dass der Deflektor und Perspektor in einer dritten und einer vierten Anordnung so positionierbar sind, dass die optische Achse nach der Ablenkung durch Deflektor und Perspektor bei der dritten und vierten Anordnung einen von dem lichtempfindlichen Element aus gesehen vor dem Perspektor liegenden zweiten Schnittpunkt (zweiter Konvergenzpunkt) aufweisen, der in seiner Lage relativ zu dem lichtempfindlichen Element nicht mit dem ersten Schnittpunkt (erster Konvergenzpunkt) übereinstimmt. Dabei sind die Bewegungsvorrichtungen so eingerichtet, dass der Deflektor und Perspektor in der dritten und vierten Anordnung jeweils so positionierbar sind, dass von dem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird. Dabei sind die Bewegungsvorrichtung so eingerichtet, dass Deflektor und Perspektor so positionierbar sind, dass bei der dritten und der vierten Anordnung von dem aufzunehmenden Objekt bzw. der aufzunehmenden Szenerie von den jeweiligen Objektpunkten in verschiedene Richtungen (Mikroperspektiven) abgestrahltes Licht von dem Perspektor auf den Deflektor umgelenkt und von letzterem zum lichtempfindlichen Element hin abgelenkt wird.

Dadurch lassen sich verschiedene Konvergenzpunkte wählen.

Dabei ist vorteilhafterweise die optische Weglänge bei der dritten und der vierten Anordnung identisch bzw. näherungsweise identisch bzw. nicht mehr als 3%, insbesondere nicht mehr als 1%, abweichend gewählt.

Mit besonderem Vorteil wird bei Verlagerung des Konvergenzpunktes die elliptische Bahn oder die elliptische Fläche bzw. Tangente entsprechend verändert.

Die erfindungsgemäße Aufgabe kann ebenfalls durch eine Vorrichtung bzw. ein Verfahren gelöst werden, bei dem eine fixe Anordnung einer Mehrzahl von Perspektoren bzw. ein fixer Perspektor mit einer Vielzahl von Linsen, Spiegeln und/oder Prismen eingesetzt wird und durch entsprechende Veränderung bzw. Bewegung des Deflektors das entsprechende Perspektorelement bzw. der entsprechende Perspektor selektiert und verwendet wird. In einer solchen Anordnung kann auf eine Verlagerung bzw. laterale Bewegung des Deflektors und Perspektors in mindestens eine Raumrichtung verzichtet werden. Eine Drehbarkeit des Deflektors um ein oder zwei Achsen kann ausreichen. Auch kann eine Bewegung des Perspektors vermieden bzw. verringert werden. Verringert ist sie in dem Fall, in dem die gesamte Anordnung bzw. die einzelnen Elemente, also Spiegel, Prismen und Linsen weiterhin gemeinsam oder einzeln bewegt werden können. Zwar wird dadurch der apparative Aufwand größer, doch lässt sich eine schnellere Anpassung an verschiedene Mikroperspektiven und Konvergenzpunkte erreichen. Durch die Wahl der verschiedenen Perspektoren bzw. verschiedenen Elemente, Spiegel, Prismen und Linsen, kann die näherungsweise Konstanz der optischen Weglänge bezüglich des jeweils ausgewählten Konvergenzpunktes gewährleistet werden. Eine Auswahl erfolgt beispielsweise durch Drehen des Deflektors.

Die Erfindung wird auch gelöst durch ein Verfahren bzw. eine entsprechende Vorrichtung zum Verlagern des Konvergenzpunktes beim Fertigen von Aufnahmen mit einer entsprechenden Stereo-Kamera aufweisend mindestens zwei, insbesondere gegeneinander so verkippte oder verkippbare optische Achsen, dass sie einen Schnittpunkt aufweisen, wobei die optischen Achsen zu jeweils einem lichtempfindlichen Element zum Erstellen von Aufnahmen führen. Dabei wird mindestens ein Deflektor, insbesondere ein Deflektor pro optischer Achse, vorgesehen bzw. bereitgestellt und mindestens ein Perspektor, insbesondere mindestens ein Perspektor pro optischer Achse, bereitgestellt bzw. vorgesehen, wobei der mindestens eine Deflektor und/oder der mindestens eine Perspektor zur Veränderung der Ablenkung des Lichts bewegbar ist/sind bzw. über entsprechende Bewegungsvorrichtungen verfügt/verfügen.

Der Deflektor und/oder Perspektor wird so positioniert, dass von dem aufzunehmenden Objekt bzw. der aufzunehmenden Szenerie auf den Perspektor treffendes Licht von diesem so abgelenkt wird, dass es auf den Deflektor trifft und von dort in Richtung eines ersten der mindestens zwei lichtempfindliche Elemente und zu diesem hin abgelenkt wird. In dieser Stellung wird eine erste Aufnahme mit dem ersten lichtempfindlichen Element gefertigt. In der vorrichtungsgemäßen Ausführung sind die Bewegungsvorrichtung entsprechend zur Positionierung des Deflektors und/oder Perspektors eingerichtet.

Daraufhin wird der Deflektor und/oder der Perspektor oder zeitgleich wird ein anderer Deflektor und/oder Perspektor so positioniert, dass von dem aufzunehmenden Objekt bzw. der aufzunehmenden Szenerie auf den Perspektor treffendes Licht von diesem so abgelenkt wird, dass es auf den ausgewählten Deflektor trifft und von dort in Richtung eines zweiten der mindestens zwei lichtempfindliche Elemente und zu diesem hin abgelenkt wird. Sodann wird eine Aufnahme mit dem zweiten lichtempfindlichen Element gefertigt. In einer vorrichtungsgemäßen Ausgestaltung der Lösung der Erfindung sind die Bewegungsvorrichtungen entsprechend ausgebildet und verfügt die Vorrichtung insbesondere über eine entsprechende Steuerung, insbesondere mit den Merkmalen der oben beschriebenen Steuerung. Bezüglich der positionierten Deflektoren und Perspektoren kann insgesamt nur ein Deflektor und ein Perspektor verwendet und entsprechend für die einzelnen lichtempfindlichen Elemente positioniert werden. Vorteilhafterweise wird jedoch mindestens ein Deflektor pro lichtempfindlichem Element, insbesondere pro Objektiv, für das jeweilige lichtempfindliche Element vorgesehen. Auch mit jeweils einem Deflektor ist es möglich, einen gemeinsamen Perspektor zu nutzen. Vorteilhafterweise wird jedoch pro lichtempfindlichem Element mindestens ein Perspektor vorgesehen. Prinzipiell ist es auch denkbar mit einem Deflektor und mehreren Perspektoren zu arbeiten.

Bei dem erfindungsgemäßen Verfahren bzw. der Vorrichtung erfolgt das Positionieren derart, dass bei den ersten Aufnahmen von dem aufzunehmenden Objekt bzw. der aufzunehmenden Szenerie von den jeweiligen Objekten in verschiedene Richtungen (Mikroperspektiven) abgestrahltes Licht von dem Perspektor auf den Deflektor umgelenkt und von letzterem zu dem jeweiligen lichtempfindlichen Element hin abgelenkt wird. Bei einer vorrichtungsgemäßen Ausgestaltung sind die Bewegungsvorrichtungen entsprechend ausgebildet.

Dabei weisen erfindungsgemäße die optischen Achsen nach der Ablenkung durch Deflektor und Perspektor bei den ersten Aufnahmen einen ersten Schnittpunkt (ersten Konvergenzpunkt) auf. Das erfindungsgemäße Verfahren ist des Weiteren gekennzeichnet dadurch, dass nach Erstellen von mindestens zwei ersten Aufnahmen die Schritte Positionieren und Fertigen von Aufnahmen (b bis e) wiederholt werden, wobei die optischen Achsen nach der Ablenkung durch Deflektor und Perspektor bei den dann gefertigten zweiten Aufnahmen einen zweiten Schnittpunkt (zweiter Konvergenzpunkt) aufweisen, der relativ von den lichtempfindlichen Elementen aus gesehen nicht mit dem ersten Schnittpunkt (erster Konvergenzpunkt) übereinstimmt.

In einem solchen Anwendungsfall zusammen mit einer zunächst stereoskopischen Aufnahmevorrichtung werden Deflektor und Perspektor nicht zur Erzeugung unterschiedlicher Mikroperspektiven benötigt. Denn die zunächst stereoskopische Aufnahmevorrichtung ist an sich schon geeignet, durch Ihre zwei Objektive und in der Regel zwei lichtempfindlichen Elemente zwei unterschiedliche Mikroperspektiven - in der Regel sogar zeitgleich - aufzunehmen. Deflektor und Perspektor werden in diesem Fall vornehmlich zur freien Verlagerung des Konvergenzpunktes im Raum, insbesondere weitgehend frei im dreidimensionalen Raum, verwendet. So kann auch bei ruhender zunächst stereoskopischen Aufnahmevorrichtung der Konvergenzpunkt weitestgehend frei verlagert werden und somit eine zunächst stereoskopischen Aufnahmevorrichtung um die Funktion der freien Verlagerung des Konvergenzpunktes, insbesondere unabhängig vom Bildausschnitt und/oder von der Bildmitte und/oder von der Ausrichtung der Aufnahmevorrichtung und/oder des Fokus erweitert werden.

Mit Vorteil ist die optische Weglänge bei den ersten Aufnahmen näherungsweise gleich, insbesondere nicht mehr als 3% abweichend, insbesondere nicht mehr als 1% abweichend. Vorteilhafterweise ist auch die optische Weglänge von dem zweiten Konvergenzpunkt zu den lichtempfindlichen Elementen bei den zweiten Aufnahmen näherungsweise gleich, insbesondere nicht mehr als drei 3%, insbesondere nicht mehr als 1%, abweichend.

Das Verfahren ist dabei vorteilhafterweise dadurch gekennzeichnet, dass ein erstes der Elemente Perspektor und Deflektor zum Positionieren in mindestens eine Richtung, insbesondere zwei oder drei Raumrichtungen, entlang einer näherungsweise elliptischen Bahn und/oder ellipsoiden Fläche oder einer Tangente an einer solchen Fläche und/oder Bahn bewegt als auch um mindestens eine Achse, insbesondere drei Achsen rotiert wird, wobei das zweite der Elemente Perspektor und Deflektor in einem ersten Brennpunkt der elliptischen Bahn und/oder ellipsoiden Fläche angeordnet ist und der Konvergenzpunkt in dem anderen Brennpunkt liegt. Besonders vorteilhaft ist es, den Perspektor in drei Raumrichtungen zu bewegen und um drei Achsen zu rotieren und den Deflektor um zwei Achsen zu rotieren.

Mit Vorteil wird die Bewegung so durchgeführt, dass der Perspektor entlang einer näherungsweise elliptischen Bahn und/oder ellipsoiden Fläche oder einer Tangente an einer solchen Fläche und/oder Bahn verfahrbar und verschwenkbar und/oder verkippbar ist, wobei der Deflektor in einem ersten Brennpunkt der elliptischen Bahn und der ellipsoiden Fläche angeordnet ist und der Konvergenzpunkt in dem anderen Brennpunkt liegt.

Bei einer solchen gezielten Verlagerung des Perspektors bzw. Positionierung des Deflektors beziehen sich diese Angaben vorteilhafterweise immer auf den optischen Zentralpunkt bzw. Mittelpunkt der aktiven Fläche.

In einer vorrichtungsgemäßen Lösung sind die Bewegungsvorrichtungen entsprechend ausgeführt.

Mit Vorteil wird der Deflektor und/oder Perspektor zum Positionieren in b und d lateral in mindestens eine Richtung, insbesondere zwei oder drei Raumrichtungen bewegt, als auch um mindestens eine Achse, insbesondere zwei Achsen, rotiert.

Entsprechende vorteilhafte Ausbildungen lassen sich den bezüglich der obig geschilderten Verfahrens- bzw. Vorrichtungslösungen analog entnehmen und entsprechend übertragen.

Insbesondere ist das Verfahren auf einer elliptischen Bahn bzw. ellipsoiden Fläche bzw. einer entsprechenden Tangente und Wechseln dieser ellipsoiden Fläche oder elliptischen Bahn bzw. Tangente beim Wechseln des Konvergenzpunkt vorteilhaft. Auch das Vorsehen einer entsprechenden Steuerung ist bevorzugt.

Gelöst wird die Erfindung auch durch die Verwendung der Verlagerung des Konvergenzpunktes relativ zur Aufnahmevorrichtung bei der Erstellung von bewegten Aufnahmen, bei denen der Konvergenzpunkt, insbesondere dreidimensional, der Bewegung eines im Bildausschnitt bewegten Objektes folgt und/oder zwischen zwei Objekten hin und her wechselt. Durch eine derartige Verlagerung des Konvergenzpunktes lassen sich zahlreiche vorteilhafte optische Effekte sowie szenische und narrative Wirkung erzielen. Dabei kann die Aufnahmevorrichtung ruhen und insbesondere bei gleichem Bildausschnitt und gleicher Blickrichtung bzw. Ausrichtung der Aufnahmevorrichtung der Konvergenzpunkt relativ zur Aufnahmevorrichtung verlagert werden. Unter einem, insbesondere räumlichen, Folgen eines bewegten Objektes ist eine konstante relative Position des Konvergenzpunktes zum bewegten Objekt zu verstehen. Dabei kann der Konvergenzpunkt insbesondere vor, auf, hinter dem oder in Nähe zu dem Objekt liegen. Wird die Bewegung des Objektes mit einer Bewegung des Aufnahmegerätes gekoppelt, so kann in einem Folgen auch ein Folgen mit überlagerter Bewegung des Aufnahmeobjektes verstanden werden. Dies ist so zu interpretieren, dass bei ruhender Kamera bzw. bei entsprechender Zerlegung der einzelnen Bewegungen der Konvergenzpunkt dem Objekt folgt, dieser Bewegung des Konvergenzpunktes jedoch die Bewegung der Kamera überlagert ist. Dies ist beispielsweise insbesondere beim Umfahren von bewegten Objekten bzw. beim Umfliegen von bewegten Objekten vorteilhaft.

Zwar ist es prinzipiell beispielsweise aus der EP 0641132A1 bekannt, den Konvergenzpunkt bei der Widergabe zu verlagern. Es ist jedoch weder die dreidimensionale Verlagerung bei der Aufnahme noch die Art der Verlagerung bekannt. Aber erst dadurch lassen sie die beabsichtigen optische Effekte sowie szenische und narrative Wirkung auf herkömmlichen Wiedergabevorrichtungen realisieren.

Wird ein Wechseln des Konvergenzpunktes zwischen zwei Objekten gewählt, so wird der Wechsel vorteilhafterweise mit einer entsprechenden Aktion der Objekte synchronisiert. So kann insbesondere bei entsprechender Aktivität des ersten Objektes der Konvergenzpunkt beim, im oder auf dem ersten Objekt liegen und sobald das zweite Objekt eine entsprechende Aktivität zeigt, der Konvergenzpunkt zum, auf oder in das zweite Objekt wechseln. Auch ist es denkbar, einen Wechsel zwischen mehreren Objekten durchzuführen.

Gelöst wird die Aufgabe auch durch ein Verfahren zum dreidimensionalen Rendern virtueller Anordnungen, wobei der Konvergenzpunkt der optischen Achsen in verschiedenen aufeinanderfolgenden Frames nicht übereinstimmt. Dabei wird vorteilhafterweise eine mikroperspektivische Sequenz geschaffen, also eine sequentielle Abfolge von Frames mit Blickrichtungen aus unterschiedlichen Mikroperspektiven. Innerhalb dieser Sequenz weisen dabei nicht alle Framepaare zueinander korrespondierenden Mikroperspektiven den gleichen Konvergenzpunkt der optischen Achsen auf. Darin ist eine Umsetzung des Verfahrens bzw. eine Nutzung der Vorrichtung im virtuellen Raum zu verstehen.

Beim Rendern virtueller Anordnungen werden entsprechend perspektivische Aufnahmen erstellt. Dabei kann der Konvergenzpunkt prinzipiell frei gewählt werden. Werden jedoch die hier genannten Randbedingungen beachtet, ergeben sich besonders vorteilhafte Renderergebnisse. So ist beispielsweise darauf zu achten, dass die optische virtuelle Weglänge der einzelnen Mikroperspektiven bezüglich eines Konvergenzpunktes näherungsweise konstant ist. Wird der Konvergenzpunkt verlagert, können die dann aufgenommenen Perspektiven andere, jedoch ebenfalls näherungsweise gleiche optische Weglängen aufweisen.

Vorteilhafterweise werden zur Berechnung der gerenderten Frames virtuelle Aufnahmeobjekte auf ebenso elliptischen Bahnen bzw. ellipsoiden Flächen oder daran angelegten Tangenten verwendet und das Ellipsoid bzw. die elliptische Bahn bzw. die Tangente beim Wechsel des Konvergenzpunktes verändert. Eine Einbeziehung von Spiegeln beim Rendern ist zwar möglich, jedoch nicht erforderlich, da die Bewegung von Massen bei der Bewegung virtueller Aufnahmekörper nicht erforderlich ist.

Da die virtuelle Kamera kein Gewicht und somit keine Trägheit besitzt, kann zur Erstellung einer multiperspektivischen Sequenz auf Deflektor und/oder Perspektor verzichtet werden und können die verbleibenden virtuellen Elemente, insbesondere die virtuelle Kamera, virtuell bewegt werden. Insbesondere kann die virtuelle Kamera auf einer Kugel, deren Mittelpunkt gleich dem Konvergenzpunkt ist bewegt werden, um Aufnahmen aus unterschiedlichen Mikroperspektiven zu erstellen. Zur Verlagerung des Konvergenzpunktes kann die Kugel verändert werden.

Besonders vorteilhaft ist die Erzeugung von multiperspektivischen Sequenzen durch Rendern virtueller Anordnungen zur Simulation von später in der Realität durchzuführenden Aufnahmen multiperspektivischer Sequenzen. Dabei kann es sich bei den virtuellen Anordnungen um, insbesondere vereinfachte, Abbildungen der real abzulichtenden Szenen handeln.

Vorteilhafterweise wird das Verfahren derart durchgeführt, dass zunächst ein erfindungsgemäßes Rendern eines virtuellen Modells einer realen Anordnung und/oder Szenerie durchgeführt wird und mit den eingesetzten und/oder ausgewählten Parametern, wie beispielsweise Lagen des Konvergenzpunktes, des und/oder die Mikroperspektiven und ggf. auch Fokus, Bildausschnitt und/oder Belichtung, eine reale erfindungsgemäße Aufnahme der realen Anordnung und/oder Szenerie durchgeführt und/oder eine erfindungsgemäße Vorrichtung angesteuert wird.

Insbesondere ist es vorteilhaft, das Verfahren so zu führen, dass zunächst mehrfach das erfindungsgemäße virtuelle Modell mit verschiedenen Ausprägungen mindestens eines Parameters gerendert wird und eine Ausprägung ausgewählt wird, unter deren Verwendung die Aufnahme der realen Anordnung und/oder Szenerie durchgeführt und/oder die erfindungsgemäße Vorrichtung angesteuert wird.

Somit wird die Erfindung auch gelöst durch ein Verfahren mit den Schritten, virtuelle Erstellung mindestens einer mikroperspektivischen Sequenz, insbesondere nach Anspruch 12 oder nach einer beschriebenen Ausbildungen, einer virtuellen Anordnung und/oder Szenerie, insbesondere zur Simulation, und Erstellen einer multiperspektivischen Sequenz, insbesondere nach einem Verfahren nach einem der Ansprüche 1 bis 5 oder beschriebenen vorteilhaften Ausbildungen oder unter Verwendung einer erfindungsgemäßen Vorrichtung, von einer realen Anordnung und/oder Szenerie, wobei die virtuelle Anordnung und/oder Szenerie der realen, gegebenenfalls nach Vereinfachungen und/oder Weglassungen, ähnelt oder entspricht. Vorteilhafterweise werden dabei Parameter wie die Konvergenzpunkte und/oder Mikroperspektiven und ggf. auch Fokus, Bildausschnitt und/oder Belichtung bei der Erstellung der realen multiperspektivischen Sequenzen identisch und oder ähnlich zum Rendern gewählt. Durch ein solches Vorgehen lassen sich kostengünstig und schnell bestimmte Effekte planen und optimieren und sich die Anwender an das Verfahren gewöhnen. Vorteilhafterweise werden mehrere unterschiedliche multiperspektivische Sequenzen der virtuellen Anordnung und/oder Szenerie erstellt und nur eine Auswahl daraus mit der realen Anordnung und/oder Szenerie real wiederholt.

Die Aufgabe wird auch gelöst durch ein Verfahren bzw. eine Vorrichtung zur Wiedergabe von entsprechendem Bild-, insbesondere Video- oder Filmmaterial. Auch gelöst wird die Aufgabe durch die Verwendung des entsprechenden Bild-, insbesondere Video- oder Filmmaterials, insbesondere erzeugt durch eine Vorrichtung bzw. ein Verfahren oder eine Verwendung entsprechend dieser Erfindung, zur Erzeugung dreidimensionaler Eindrücke unter Ausnutzung der Latenzzeit des menschlichen optischen Wahrnehmungsapparates, wobei innerhalb der Latenzzeit mindestens zwei unterschiedliche Mikroperspektiven den beiden menschlichen Augen angeboten werden. Dabei werden diese Mikroperspektiven vorteilhafterweise über ein und dieselbe Anzeige, insbesondere beiden, Augen dargeboten. Vorteilhafterweise werden dabei jeweils mehrere Mikroperspektiven bzw. mehrfache Aufnahmen aus jeweils zwei oder mehr Mikroperspektiven bezüglich eines Konvergenzpunktes dargeboten.

Vorteilhafterweise werden nacheinander verschiedene Mikroperspektiven zu verschiedenen Konvergenzpunkten den Augen dargeboten.

Eine solche Wiedergabe bzw. Verwendung oder Vorrichtung zur Wiedergabe hat den Vorteil, dass sie mit den klassischen Vorrichtungen bzw. Mitteln einer monografischen Bildverarbeitung (Schnitt/Postproduction) und Bildwiedergabe arbeiten kann und nicht auf besondere Extras, wie Stereo-Brillen für den Betrachter oder proprietäre autostereografische Wiedergabemedien, besondere Leinwände oder Anordnungen der wiedergebenden Elemente, wie beispielsweise 3D-Displays, angewiesen ist.

Weitere Vorteile und Ausführungsmöglichkeiten sollen im Folgenden exemplarisch und schematisch an Hand der rein schematischen Figuren beschrieben werden. Dabei zeigen die Figuren im Einzelnen:
- Fig. 1: eine Ansicht eines erfindungsgemäßen Aufbaus zur Veranschaulichung des Strahlengangs in Neutralstellung;
- Fig. 2: eine Detailansicht eines Ausschnitts aus Fig. 1 mit Angaben zu den Freiheitsgraden der beweglichen Elemente;
- Fig. 3: eine Ansicht eines erfindungsgemäßen Aufbaus zur Veranschaulichung des Strahlengangs im dreidimensionalen Raum für unterschiedliche Mikroperspektiven bei gleichem Konvergenzpunkt;
- Fig. 4: eine Ansicht zur Veranschaulichung der Verschiebung des Konvergenzpunkts im dreidimensionalen Raum;
- Fig. 5: eine Ansicht zur Veranschaulichung der Verschiebung des Konvergenzvektors relativ zur Bildmitte;
- Fig. 6: eine Ansicht eines erfindungsgemäßen Aufbaus zur Veranschaulichung des Strahlengangs zur Erreichung von Mikroperspektiven ohne den Perspektor verfahren zu müssen und
- Fig. 7: eine Ansicht eines erfindungsgemäßen Aufbaus zur Veranschaulichung des Strahlengangs bei Verlagerung des Konvergenzpunks.

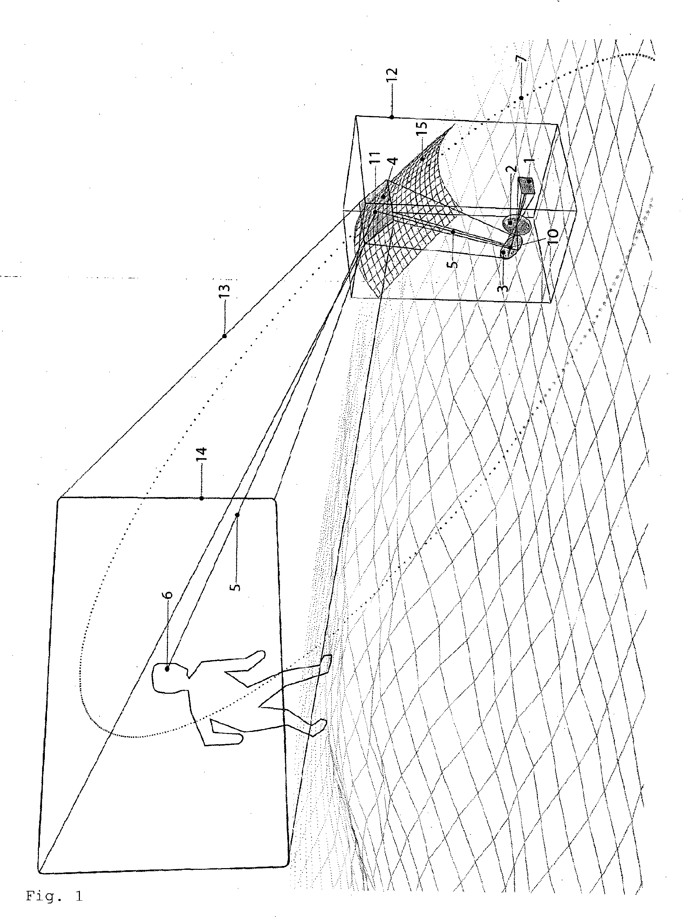

Fig. 1 zeigt eine Ansicht auf eine erfindungsgemäße Anordnung. Zu erkennen sind ein lichtempfindliches Element 1, eine Linse 2 sowie jeweils als Spiegel ausgeführt ein Perspektor 4 und ein Deflektor 3. Ebenfalls markiert sind der Deflektormittelpunkt 10, um den der Deflektor 3 rotiert und der Perspektormittelpunkt 11, um den der Perspektor 4 rotiert.

Der eingezeichnete Strahlengang 5 verläuft durch den gewählten Konvergenzpunkt 6. Entsprechend sind Perspektor 4 und Deflektor 3 hier in einer neutralen Ausgangsstellung gezeigt.

Deflektormittelpunkt 10 und Konvergenzpunkt 6 sind Brennpunkte einer Ellipse 7. Gezeigt ist des Weiteren ein Ellipsoidausschnitt 15 des Rotationsellipsoiden der Ellipse 7. Er stellt das mögliche Bewegungsprofil des Perspektor 4 dar entlang dessen sich verzerrungsfreie Mikroperspektiven zum Konvergenzpunkt 6 herstellen lassen.

Die Elemente lichtempfindliches Element 1, Linse 2, Perspektor 4 und Deflektor 3 sind beispielsweise innerhalb eines Kameragehäuses 12 untergebracht. Ein Gehäuse ist aber für die Funktionsweise nicht zwingend notwendig. Deflektor 3 und Perspektor 4 können auch ohne Gehäuse platziert werden, Linse 2 und das lichtempfindliches Element 1 sollten mindestens eine lichtdichte Umhausung oder Kameragehäuse besitzen. Neben dem Strahlengang 5, der den Mittelpunktsstrahl darstellt, sind Randstrahlen gezeigt, die den Bildöffnungswinkel 13 veranschaulichen und die geringstmöglichen Dimensionen von Deflektor 3 und Perspektor 4 vorgeben. Dadurch gekennzeichnet ist auch der Bildausschnitt 14 eingezeichnet.

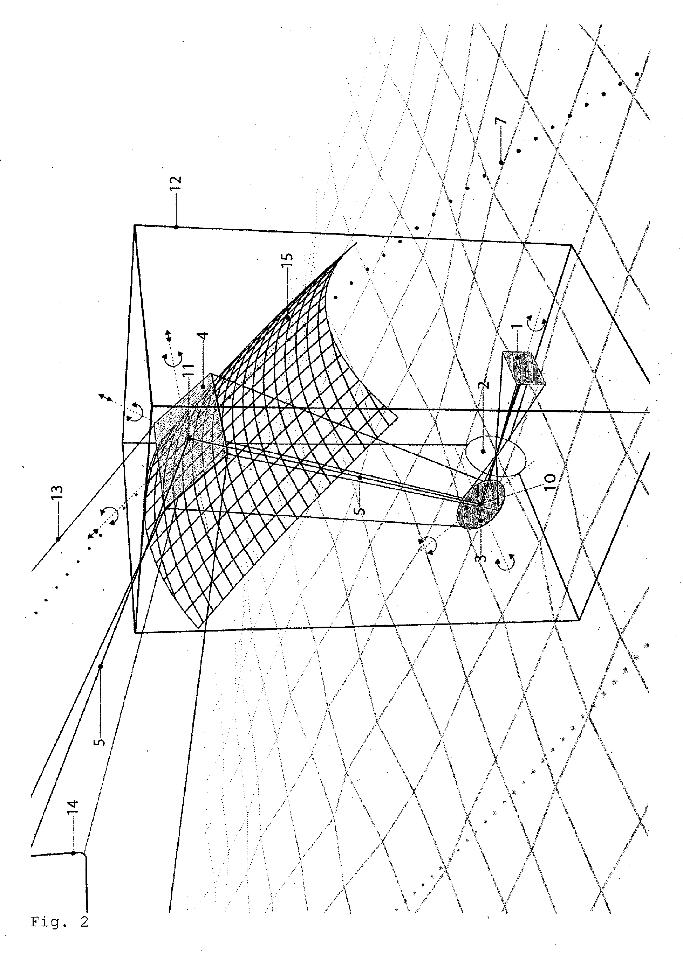

Fig. 2 zeigt einen das Kameragehäuse 12 beinhaltenden vergrößerten Ausschnitt aus Fig. 1. Eingezeichnet sind hier durch Pfeile die Bewegungs- und Rotationsfreiheiten des Perspektors 4 und des Deflektors 3 sowie der Deflektormittelpunkt 10 und der Perspektormittelpunkt 11. Darüber hinaus ist angedeutet, dass durch die Optik das Bild am lichtempfindlichen Element 1 verdreht wird. Dem kann durch verschiedene Ansätze begegnet werden. So kann eine Optik für die Drehung des Bildes oder eine Drehvorrichtung zum Mitdrehen des lichtempfindlichen Elements 1 oder eine softwaretechnische Drehung vorgesehen werden.

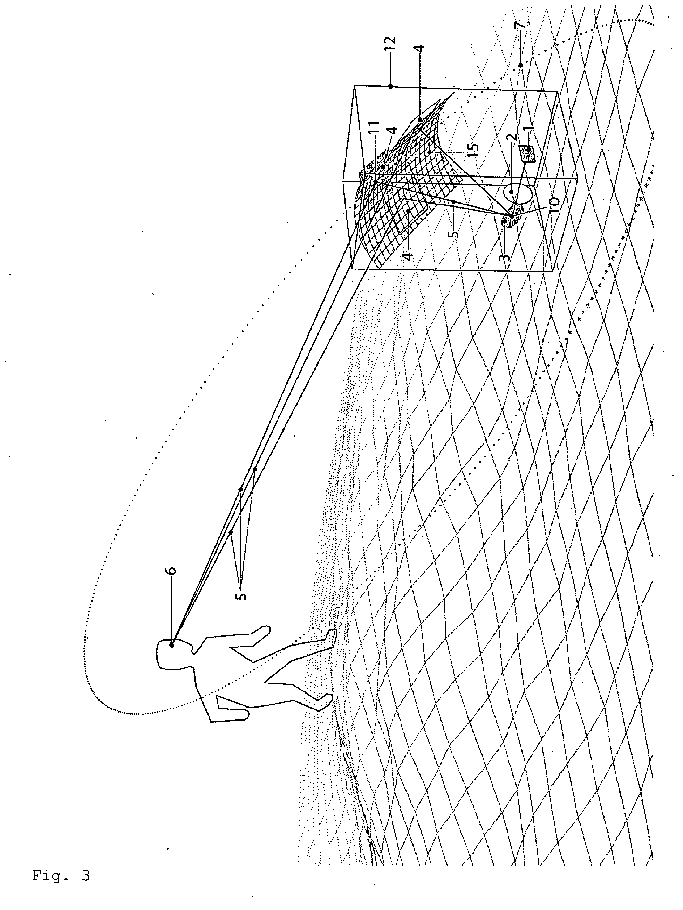

Fig. 3 zeigt die Anordnung aus den Figuren 1 und 2, verdeutlicht jedoch unterschiedliche Strahlengänge 5 für verschiedene Mikroperspektiven. Gezeigt sind Strahlengänge 5 mit gemeinsamen Konvergenzpunkt 6, deren Weglänge vom Deflektormittelpunkt 10 zum Konvergenzpunkt 6 trotz unterschiedlicher Perspektiven insgesamt gleich lang ist. Zu den unterschiedlichen Strahlengängen 5 sind die unterschiedlichen Positionen des Perspektors 4 dargestellt. Die Rotationsstellung des Deflektors 3 wird zwar zur Erzeugung der unterschiedlichen Strahlengänge 5 ebenfalls verändert, doch sind die Änderungen so gering, dass Sie in dieser Darstellung nicht zu erkennen sind.

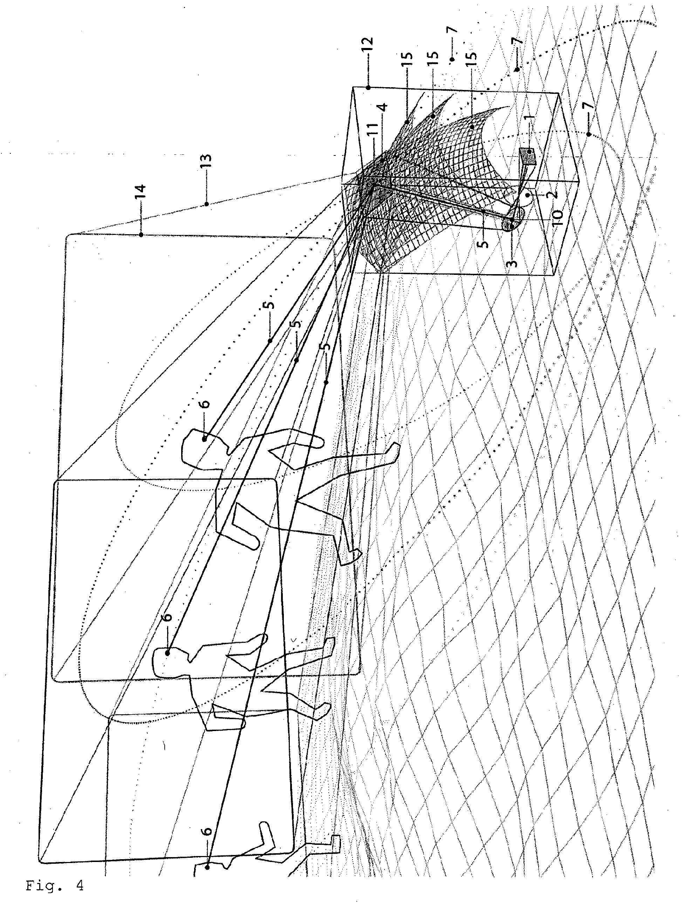

Fig. 4 zeigt das System aus den Figuren 1 bis 3. Hier sind jedoch die Strahlengänge 5 zu räumlich unterschiedlichen Konvergenzpunkten 6 gezeigt. Die Konvergenzpunkte 6 werden zeitlich nacheinander angefahren und sind dabei auf die Bewegung des Menschen, der aufgenommen wird, abgestimmt. So liegt der Konvergenzpunkt immer im Gesicht des sich relativ zum Kameragehäuse 12 bewegenden Menschen.

Die gezeigte Lage des Perspektors 4 stellt jeweils eine Grundstellung dar, von der aus die möglichen Mikroperspektiven angefahren werden können. Der Perspektor 4 liegt dazu jeweils tangential an unterschiedlichen Ellipsoiden, deren Brennpunkte jeweils im Deflektormittelpunkt 10 und im jeweiligen Konvergenzpunkt 6 liegen. Gezeigt sind die jeweiligen Ellipsoidausschnitte 15 dieser Ellipsoiden zu den unterschiedlichen Konvergenzpunkten 6. Die Ellipsoidausschnitte 15 stellen den jeweiligen mikroperspektivischen Arbeitsbereich zu den unterschiedlichen Konvergenzpunkten dar.

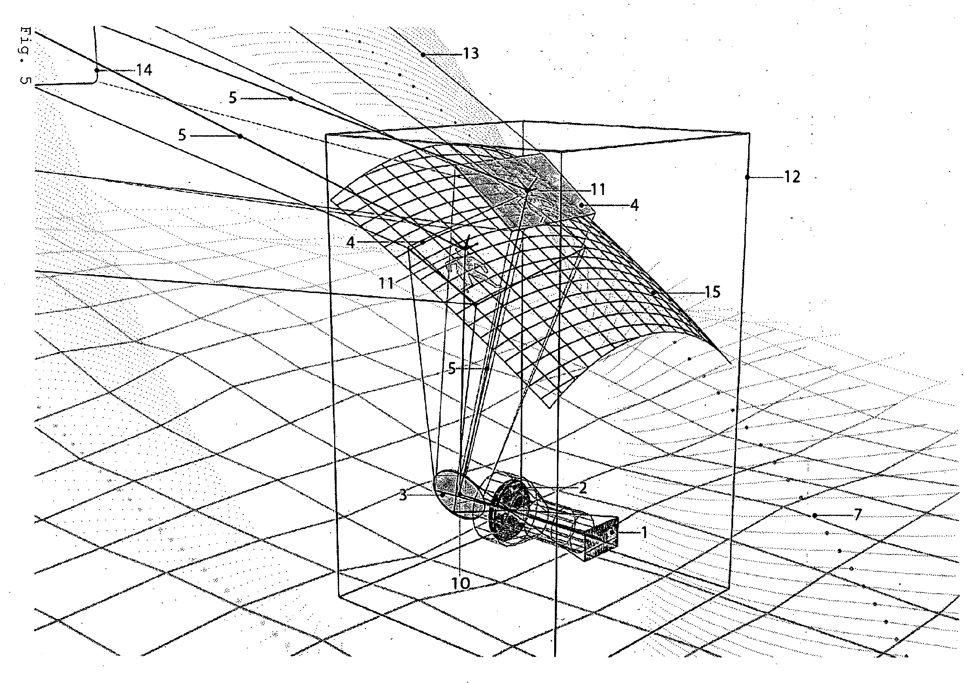

Fig. 5 zeigt einen Ausschnitt aus Figur 1, analog zu Figur 3. Dargestellt sind jedoch nur zwei Strahlengänge 5 mit den jeweiligen Lagen des Perspektors 4 auf einen gemeinsamen Konvergenzpunkt zielend. Zusätzlich gekennzeichnet sind Randstrahlen zur Kennzeichnung des Öffnungswinkels13. Des Weiteren weicht Fig. 5 von den vorherigen Darstellungen dahingehend ab, dass eine Situation gezeigt ist, in der der Konvergenzpunkt 6 und der Strahlengang 5 außerhalb der Bildmitte dezentral positioniert sind. Der Strahlengang 5 wird verlagert, indem der Perspektor 4 über dem Reflexionspunkt tangential zum Ellipsoidenschnitt 15 verschoben wird. Dies veranschaulicht, dass bei der Verwendung von 6 Freiheitgraden des Perspektors 4, den zur Konvergenz gerichtete Mittelpunkt frei innerhalb oder auch außerhalb des Bildfeldes platzieren zu können.

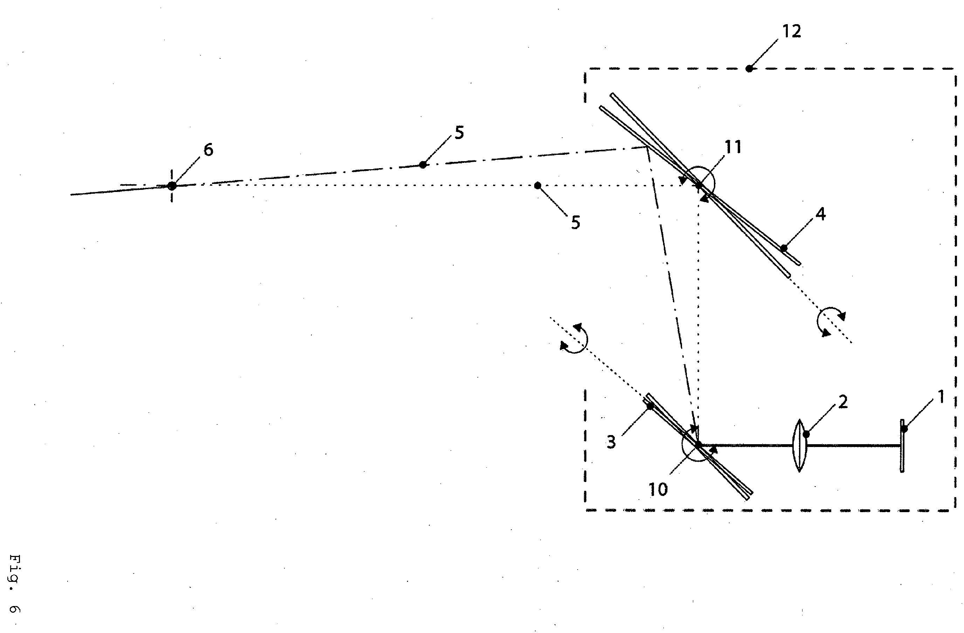

Fig. 6 zeigt zur besseren Veranschaulichung eine Ansicht auf eine erfindungsgemäße Anordnung in orthografischer 2D-Darstellung. Analog zu den Figuren 1 bis 5 sind zu erkennen ein lichtempfindliches Element 1, eine Linse 2 sowie, jeweils als Spiegel ausgeführt, ein Perspektor 4 und ein Deflektor 3. Eingezeichnet sind die Strahlengänge 5 für zwei Mikroperspektiven bei gemeinsamen Konvergenzpunkt 6. Entsprechend sind Perspektor 4 und Deflektor 3 in zwei unterschiedlichen, zu den Mikroperspektiven korrespondierenden Stellungen gezeigt.

Deflektormittelpunkt 10 und Konvergenzpunkt 6 sind Brennpunkte einer nicht gezeigten Ellipse, an der der Perspektor 4 für beide Mikroperspektiven näherungsweise tangential anliegt. Dadurch ist die optische Weglänge für beide Strahlengänge 5 beinahe identisch. Zum Erreichen der näherungsweise tangentialen Lage für den strichpunktierten Strahlengang 5 wird der Perspektor 4 aus der Lage bezüglich des punktierten Strahlengangs 5 nicht verfahren, sondern lediglich rotiert. Der strichpunktierte Strahlengang trifft den Perspektor 4 somit nicht mittig. Ein solches Vorgehen kann eine dynamischere Spiegeleinstellung ermöglichen. Ein Verfahren des Perspektors 4 ist aber ebenfalls denkbar. Bei der Verringerung der Bewegung ist es von besonderem Vorteil, die für die Bewegung benötigte Zeit zu minimieren. Dies bedeutet, dass Bewegungen möglichst so auf die einzelnen Freiheitsgerade des Systems verteilt werden, dass die gestellten Anforderungen an die Genauigkeit erfüllt werden, die Bewegung jedoch möglichst wenig Zeit in Anspruch nimmt. Ohne Verfahren ist eine absolute tangentiale Lage für beide Mikroperspektiven jedoch nicht erreichbar. Die notwendigen Toleranzen können in der Regel jedoch eingehalten werden. Ein Verfahren ist jedoch ebenfalls möglich.

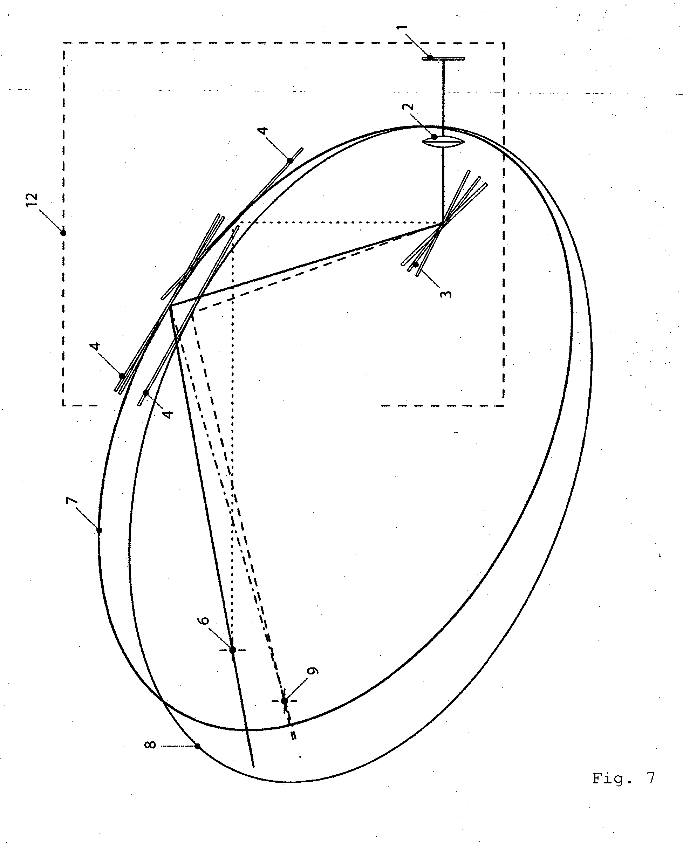

Fig. 7 veranschaulicht die Verlagerung eines Konvergenzpunktes sowie das in Fig. 6 angewandte Näherungsverfahren. Zu erkennen in Figur 7 sind ein lichtempfindliches Element 1, eine Linse 2, ein Deflektor 3 in verschiedenen Stellungen, ein Perspektor 4, ebenfalls in verschiedenen Positionen sowie ein erster Konvergenzpunkt 6, eine erste Ellipse 7 und ein zweiter Konvergenzpunkt 9 und eine zweite Ellipse 8.

Zunächst werden aus zwei unterschiedlichen Mikroperspektiven Aufnahmen mit dem ersten Konvergenzpunkt 6 gefertigt. Dazu befindet sich der Perspektor 4 auf der ersten Ellipse 7. Die Strahlengänge sind durchgezogen und punktiert veranschaulicht.

Sodann wird der Konvergenzpunkt vom ersten Konvergenzpunkt 6 zum zweiten Konvergenzpunkt 9 verschoben. Zur Verbesserung der Übersichtlichkeit wurde hier nur ein Strahlengang zu einer Mikroperspektive gezeichnet. Durch die Verschiebung des Konvergenzpunktes verändert sich auch die gedachte Ellipse, deren Brennpunkte durch den Konvergenzpunkt 9 und den Mittelpunkt des Deflektor 3 bestimmt werden. Die zum zweiten Konvergenzpunkt 9 passende Ellipse ist die zweite Ellipse 8. Durch Bewegen des Deflektors 3 und des Perspektors 4 kann der Strahlengang entsprechend verändert und der zweite Konvergenzpunkt 9 ausgewählt werden. Dazu wird der Perspektor 4 tangential auf der zweiten Ellipse 8 bewegt. Der Strahlengang ist durch eine gestrichelte Linie veranschaulicht.

Zur Minimierung der notwendigen Bewegungen bzw. zur Beeinflussung der optischen Weglänge vom Konvergenzpunkt zum lichtempfindlichen Element 1 kann der Perspektor 4 aber beispielsweise auch auf der ersten Ellipse 7 angeordnet werden und können trotzdem Aufnahmen mit dem zweiten Konvergenzpunkt 9 gefertigt werden. Der Strahlengang für eine Mikroperspektive ist strichpunktiert veranschaulicht.

### Bezugszeichenliste

- 1: lichtempfindliches Element
- 2: Linse
- 3: Deflektor
- 4: Perspektor
- 5: Strahlengang
- 6: erster Konvergenzpunkt
- 7: Ellipse
- 8: zweite Ellipse
- 9: zweiter Konvergenzpunkt
- 10: Deflektormittelpunkt
- 11: Perspektormittelpunkt
- 12: Kameragehäuse
- 13: Bildöffnungswinkel
- 14: Bildausschnitt
- 15: Ellipsoidausschnitt / mikroperspektivischer Arbeitsbereich

## Patentansprüche

1. Verfahren zum Aufnehmen von dreidimensionalen Objekten und Szenerien mit folgenden Schritten:
a) Bereitstellen einer optischen Kamera mit einem eine optische Achse aufweisenden Objektiv (2) und einem in einem optischen Strahlengang hinter dem Objektiv (2) angeordneten lichtempfindlichen Element (1) zur Aufnahme von Bildern (14);
b) Bereitstellen mindestens eines ersten den Strahlengang (5) von einfallendem Licht ablenkenden Elements (Deflektor) (3) und mindestens eines zweiten den Strahlengang von einfallendem Licht ablenkenden Elements (Perspektor) (4), wobei der Deflektor (3) und der Perspektor (4) zur Veränderung der Ablenkung des Lichts bewegbar sind;
c) Positionieren des Deflektors (3) und Positionieren des Perspektors (4) so, dass von dem aufzunehmenden Objekt bzw. der aufzunehmenden Szenerie (14) auf den Perspektor (4) treffendes Licht von diesem so abgelenkt wird, dass es auf den Deflektor (3) trifft und von dort in Richtung des lichtempfindlichen Elementes (1) und zu diesem hin abgelenkt wird (erste Mikroperspektive);
d) Fertigen mindestens einer ersten Aufnahme auf dem lichtempfindlichen Element (1);
e) Positionieren des Deflektors (3) und Positionieren des Perspektors (4) so, dass von dem aufzunehmenden Objekt bzw. der aufzunehmenden Szenerie (14) auf den Perspektor (4) treffendes Licht von diesem so abgelenkt wird, dass es auf den Deflektor (3) trifft und von dort in Richtung des lichtempfindlichen Elementes (1) und zu diesem hin abgelenkt wird (zweite Mikroperspektive) und
f) Fertigen einer zweiten Aufnahme auf dem lichtempfindlichen Element (1), wobei das Positionieren in Schritt e) derart erfolgt, dass bei der zweiten Aufnahme von dem aufzunehmenden Objekt bzw. der aufzunehmenden Szenerie (14) von den jeweiligen Objektpunkten in eine andere Richtung (zweite Mikroperspektive) abgestrahltes Licht von dem Perspektor (4) auf den Deflektor (3) umgelenkt und von letzterem zu dem lichtempfindlichen Element (1) hin abgelenkt wird als bei der ersten Aufnahme (erste Mikroperspektive),
wobei die jeweils durch Deflektor (3) und Perspektor (4) bei der ersten und der zweiten Aufnahme abgelenkten optischen Achsen einen von dem lichtempfindlichen Element (1) aus gesehen vor dem Perspektor (4) gelegenen ersten Schnittpunkt (erster Konvergenzpunkt) (6) aufweisen,
wobei der Perspektor (4) zum Positionieren in den Schritten c und e lateral in mindestens eine Richtung, insbesondere zwei oder drei Raumrichtungen, bewegt als auch um mindestens eine Achse, insbesondere drei Achsen, rotiert und der Deflektor (3) zum Positionieren in den Schritten c und e um mindestens eine Achse, insbesondere zwei Achsen, rotiert wird, **dadurch gekennzeichnet, dass** das Positionieren eines ersten der Elemente Perspektor (4) und Deflektor (3) durch Verfahren entlang einer näherungsweise elliptischen Bahn (7) und/oder ellipsoiden Fläche (15) oder einer Tangente an einer solchen Bahn oder Fläche und Verschwenken und/oder Verkippen erfolgt, wobei das zweite der Elemente Perspektor (4) und Deflektor (3) in einem ersten Brennpunkt der elliptischen Bahn (7) und/oder ellipsoiden Fläche (15) angeordnet wird und der Konvergenzpunkt (6) im anderen Brennpunkt liegt.

2. Verfahren nach Anspruch 1, **dadurch gekennzeichnet, dass** die optische Weglänge von dem ersten Konvergenzpunkt zum lichtempfindlichen Element bei erster Aufnahme und zweiter Aufnahme näherungsweise gleich ist, insbesondere nicht mehr als 3%, insbesondere nicht mehr als 1%, schwankt.

3. Verfahren nach einem der vorstehenden Ansprüche, **dadurch gekennzeichnet, dass** als Perspektor und/oder Deflektor mindestens ein Spiegel, mindestens eine Linse und/oder mindestens ein Prisma verwendet wird.

4. Verfahren nach einem der vorstehenden Ansprüche, **dadurch gekennzeichnet, dass** nach Erstellen von mindestens einer ersten und einer zweiten Aufnahmen die Schritte c) bis f) wiederholt werden, wobei die optische Achse nach der Ablenkung durch Deflektor und Perspektor bei den dann gefertigten ersten und zweiten Aufnahmen einen zweiten Schnittpunkt (zweiter Konvergenzpunkt) aufweisen, der in seiner Lage relativ zu dem lichtempfindlichen Element nicht mit dem ersten Schnittpunkt (erster Konvergenzpunkt) übereinstimmt.

5. Verfahren nach Anspruch 4 und Anspruch 3, wobei die elliptische Bahn bzw. der Ellipsoide entsprechend der Verschiebung des Konvergenzpunktes verändert wird.

6. Vorrichtung zum Aufnehmen von dreidimensionalen Objekten und Szenerien aufweisend:
- eine optischen Kamera mit einem eine optische Achse aufweisenden Objektiv und ein in einem optischen Strahlengang hinter dem Objektiv angeordneten lichtempfindliches Element zur Aufnahme von Bildern;
- mindestens ein erstes den Strahlengang von einfallendem Licht ablenkendes Element (Deflektor) und mindestens ein zweites den Strahlengang von einfallendem Licht ablenkendes Element (Perspektor), wobei der Deflektor und der mindestens eine Perspektor zur Veränderung der Ablenkung des Lichts mit jeweils mindestens einer Bewegungsvorrichtung gekoppelt sind;
- wobei die Bewegungsvorrichtungen so eingerichtet sind, dass der Deflektor und der Perspektor in einer ersten Anordnung so positionierbar sind, dass von einem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird;
- wobei die Bewegungsvorrichtungen so eingerichtet sind, dass der Deflektor und der Perspektor in einer zweiten Anordnung so positionierbar sind, dass von dem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird,
- wobei die Bewegungsvorrichtungen so eingerichtet sind, dass Deflektor und Perspektor so positionierbar sind, dass bei der zweiten Anordnung von dem aufzunehmenden Objekt bzw. der aufzunehmenden Szenerie von den jeweiligen Objektpunkten in eine andere Richtung (zweite Mikroperspektiv) abgestrahltes Licht von dem Perspektor auf den Deflektor umgelenkt und von letzterem zu dem lichtempfindlichen Element hin abgelenkt wird als bei der ersten Anordnung (erste Mikroperspektive), wobei die jeweils durch Deflektor und Perspektor bei der ersten und der zweiten Anordnung abgelenkten optischen Achsen einen von dem lichtempfindlichen Element aus gesehen vor dem Perspektor gelegenen ersten Schnittpunkt (erster Konvergenzpunkt) aufweisen,
wobei die Bewegungsvorrichtungen so eingerichtet sind, dass der Deflektor und/oder Perspektor zum Positionieren in der ersten und der zweiten Anordnung in mindestens eine Richtung, insbesondere zwei oder drei Raumrichtungen bewegt als auch um mindestens eine Achse, insbesondere zwei Achsen, rotiert werden und der Deflektor zum Positionieren in den Schritten c und e um mindestens eine Achse, insbesondere zwei Achsen, rotiert kann,
**dadurch gekennzeichnet, dass** die Bewegungsvorrichtung so eingerichtet ist, dass ein erstes der Elemente Perspektor und Deflektor entlang einer näherungsweise elliptischen Bahn und/oder ellipsoiden Fläche oder einer Tangente an einer solchen Fläche und/oder Bahn verfahrbar und verschwenkbar und/oder verkippbar ist, wobei das zweite der Elemente Perspektor und Deflektor in einem ersten Brennpunkt der elliptischen Bahn und/oder ellipsoiden Fläche angeordnet ist und der Konvergenzpunkt in dem anderen Brennpunkt liegt.

7. Vorrichtung nach Anspruch 6, **dadurch gekennzeichnet, dass** die Bewegungsvorrichtung zum dreidimensionalen Verkippen des Deflektors und/oder Perspektors um einen Punkt, insbesondere Brennpunkt, des Deflektors bzw. Perspektors beziehungsweise um den optischen Mittelpunkt des Deflektors bzw. Perspektors eingerichtet sind/ist.

8. Vorrichtung nach einem der Ansprüche 6 bis 7 **dadurch gekennzeichnet, dass** die Bewegungsvorrichtungen so eingerichtet sind, dass der Deflektor und der Perspektor in einer dritten und einer vierten Anordnung so positionierbar sind, dass die optische Achse nach der Ablenkung durch Deflektor und Perspektor bei der dritten und vierten Anordnung einen von dem lichtempfindlichen Element aus gesehen vor dem Perspektor liegenden zweiten Schnittpunkt (zweiter Konvergenzpunkt) aufweisen, der in seiner Lage relativ zu dem lichtempfindlichen Element nicht mit dem ersten Schnittpunkt (erster Konvergenzpunkt) übereinstimmt, wobei die Bewegungsvorrichtungen so eingerichtet sind, dass Deflektor und Perspektor in der dritten und vierten Anordnung jeweils so positionierbar sind, dass von dem aufzunehmenden Objekt bzw. der aufzunehmenden Szenerie auf den Perspektor treffendes Licht von diesem so abgelenkt wird, dass es auf den Deflektor trifft und von dort in Richtung des lichtempfindlichen Elementes und zu diesem hin abgelenkt wird,
wobei die Bewegungsvorrichtungen so eingerichtet sind, dass Deflektor und Perspektor so positionierbar sind, dass bei der dritten und der vierten Anordnung von dem aufzunehmenden Objekt bzw. der aufzunehmenden Szenerie von den jeweiligen Objektpunkten in verschiedene Richtungen (Mikroperspektiven) abgestrahltes Licht von dem Perspektor auf den Deflektor umgelenkt und von letzterem zu dem lichtempfindlichen Element hin abgelenkt wird.

9. Vorrichtung nach Anspruch 6 oder 7 und Anspruch 8, **dadurch gekennzeichnet, dass** bei Verlagerung des Konvergenzpunktes die elliptische Bahn oder die ellipsoide Fläche entsprechend verändert wird.

10. Verfahren zum Verlagern des Konvergenzpunktes bei stereoskopischen Aufnahmen mit einer stereoskopischen Kamera aufweisend mindestens zwei, insbesondere gegeneinander so verkippte oder verkippbare optische Achsen, dass sie einen Schnittpunkt aufweisen, wobei die optischen Achsen zu, insbesondere jeweils, einem lichtempfindlichen Element zum Erstellen von Aufnahmen führen,
a. Bereitstellen mindestens eines Deflektors, insbesondere eines Deflektors pro optischer Achse, und bereitstellen mindestens eines Perspektors, insbesondere mindestens eines Perspektors pro optischer Achse, wobei der mindestens eine Deflektor und der mindestens eine Perspektor zur Veränderung der Ablenkung des Lichts bewegbar sind;
b. Positionieren des Deflektors und Perspektors so, dass von dem aufzunehmenden Objekt bzw. der aufzunehmenden Szenerie auf den Perspektor treffendes Licht von diesem so abgelenkt wird, dass es auf den Deflektor trifft und von dort in Richtung eines ersten der insbesondere mindestens zwei lichtempfindlichen Elemente und zu diesem hin abgelenkt wird;
c. Fertigen mindestens einer ersten Aufnahme mit dem ersten lichtempfindlichen Elementes;
d. Positionieren des Deflektors und Positionieren des Perspektors so, dass von dem aufzunehmenden Objekt bzw. der aufzunehmenden Szenerie auf den Perspektor treffendes Licht von diesem so abgelenkt wird, dass es auf den ausgewählten Deflektor trifft und von dort in Richtung eines insbesondere zweiten der lichtempfindlichen Elemente und zu diesem hin abgelenkt wird und
e. Fertigen mindestens einer ersten Aufnahme mit dem zweiten lichtempfindlichen Elementes,
wobei das Positionieren derart erfolgt, dass bei der zweiten Aufnahme von dem aufzunehmenden Objekt bzw. der aufzunehmenden Szenerie von den jeweiligen Objektpunkten in eine andere Richtung (zweite Mikroperspektiv) abgestrahltes Licht von dem Perspektor auf den Deflektor umgelenkt und von letzterem zu dem lichtempfindlichen Element hin abgelenkt wird als bei der ersten Aufnahme (erste Mikroperspektive),
wobei die optische Achse nach der Ablenkung durch Deflektor und Perspektor bei beiden ersten Aufnahmen einen ersten Schnittpunkt (erster Konvergenzpunkt) aufweisen
**dadurch gekennzeichnet dass**,
nach Erstellen von mindestens zwei ersten Aufnahmen die Schritte b) bis e) wiederholt werden, wobei die optischen Achsen nach der Ablenkung durch Deflektor und Perspektor bei den dann gefertigten zweiten Aufnahme einen zweiten Schnittpunkt (zweiter Konvergenzpunkt) aufweisen, der relativ von dem, insbesondere den, lichtempfindlichen Element(en) aus gesehen nicht mit dem ersten Schnittpunkt (erster Konvergenzpunkt) übereinstimmt.

11. Verwendung der Verlagerung des Konvergenzpunktes bei der Aufnahme mit einer Aufnahmevorrichtung relativ zu der Aufnahmevorrichtung bei der Erstellung von Bild-, insbesondere Video- oder Filmmaterial, wobei der Konvergenzpunkt der Bewegung eines im Bildausschnitt bewegten Objekts folgt und/oder zwischen zwei Objekten hin und her wechselt.

12. Verfahren zum dreidimensionalen Rendern virtueller Anordnungen, wobei der Konvergenzpunkt der optischen Achsen in verschiedenen aufeinanderfolgenden Frames nicht übereinstimmt.

13. Verfahren nach Anspruch 12, wobei unter Verwendung mindestens eines beim Rendern verwendeten Parameters ein Verfahren nach einem der Ansprüche 1 bis 5 durchgeführt und/oder eine Vorrichtung nach einem der Ansprüche 6 bis 9 angesteuert wird.

14. Verfahren zur Wiedergabe von Bild-, insbesondere Video- oder Filmmaterial, zur Erzeugung eines dreidimensionalen Eindrucks, wobei innerhalb der Latenzzeit des menschlichen Wahrnehmungsapparates mindestens je ein Bild eines Objektes bzw. einer Szenerie aus unterschiedlichen Mikroperspektiven aber mit einem gemeinsamen Konvergenzpunkt einem oder beiden menschlichen Augen dargeboten werden.

## Claims

1. A method for recording three-dimensional objects and sceneries with the following steps:
a) providing an optical camera with a lens (2) having an optical axis and one photosensitive element (1) arranged in an optical beam path behind the lens (2) for recording pictures (14);
b) providing at least one first element (deflector) (3) deflecting the beam path (5) of incident light and at least one second element (perspector) (4) deflecting the optical path of incident light (4), wherein the deflector (3) and the perspector (4) are movable to change the deflection of the light;
c) positioning of the deflector (3) and positioning of the perspector (4) so that the light striking the perspector (4) is diverted by the object to be recorded or the scenery to be recorded (14) in such a way that it impinges on the deflector (3) and from there in the direction of the photosensitive element (1) and diverted towards the latter (first micro perspective).
d) producing at least one first recording on the photosensitive element (1);
e) positioning the deflector (3) and positioning the perspector (4) so that the light striking the perspector (4) is diverted by the object to be recorded or the scenery (14) to be recorded in such a way that it impinges on the deflector (3) and from there is diverted in the direction of the photosensitive element (1) and towards the latter (first microperspective) and
f) producing a second recording on the photosensitive element (1), wherein the positioning in step e) is such a way that during the second recording of the object to be recorded or the scenery to be recorded (14), the light is diverted from the perspector (4) on the deflector (3), from the respective object points in a different direction (second microperspective) and is diverted from the latter to the photosensitive element (1) as during the first recording (first microperspective),
whereas the optical axes diverted respectively by the deflector (3) and the perspector (4) during the first and the second recordings have a first intersection point (the first convergence point) (6) seen from the photosensitive element (1) upstream of the perspector (4),
wherein the perspector (4) for positioning in steps c and e is mobile laterally in at least one direction, in particular two or three space directions, by rotating about at least one axis, in particular three axes, and the deflector (3) for positioning in steps c and e is rotated around at least one axis, in particular two axes, **characterised in that** a first of the elements perspector (4) and deflector (3) by moving along an approximately elliptical path (7) and/or ellipsoidal surface (15) or a tangent to such a web or surface is positioned, pivoted and/or tilted, wherein the second of the elements perspector (4) and deflector (3) is arranged in a first focal point of the elliptical path (7) and/or ellipsoidal surface (15) and the converging point (6) is located in the other focal point.

2. The method according to claim 1, **characterised in that** the optical path length from the first convergence point to the photosensitive element during the first recording and the second recording is approximately equal, in particular does not fluctuate more than 3%, especially more than 1%.

3. The method according to one of the previous claims, **characterised in that** at least one mirror, at least one lens and/or at least one prism is used as a perspector and/or deflector.

4. The method according to one of the previous claims, **characterised in that** after performing at least a first and a second recording, the steps c) to f) are repeated, wherein the optical axis after deflection through a deflector and perspector during the first and second recordings made, have a second intersection point (the second convergence point), which does not coincide with the first intersection point (the first convergence point) in its position relative to the photosensitive element.

5. The method of claim 4 and claim 3, whereas the elliptical path and the ellipsoid is changed according to the displacement of the convergent point.

6. A device for recording three-dimensional objects and sceneries comprising:
- an optical camera with a lens having an optical axis and one photosensitive element arranged in an optical beam path behind the lens for recording pictures;
- at least one first element deflecting the beam path of incident light (deflector) and at least one second element deflecting the beam path of incident light (perspector), wherein the deflector and the at least one perspector are coupled, for changing the deflection of light each having at least one movement direction;
wherein the motion devices are arranged in such a way that the deflector and the perspector in a first arrangement can be positioned so such that the light striking the perspector is diverted therefrom by the object to be recorded or the scenery (14) to be recorded such a way that it impinges on the deflector and is diverted therefrom in the direction of the photosensitive element;
wherein the motion devices are arranged in such a way that the deflector and the perspector in a first arrangement can be positioned so such that the light striking the perspector is diverted by the object to be recorded or the scenery (14) to be recorded in such a way that it impinges on the deflector and is diverted therefrom in the direction of the photosensitive element;
wherein the motion devices are arranged in such a way that the deflector and the perspector can be positioned in such a way that in the second arrangement of the object to be recorded or the scenery to be recorded the incident light is diverted from the respective object points in a different direction (second microperspective) from the perspector on the deflector and is diverted from the latter to the photosensitive element as in the first arrangement (first microperspective), whereas the optical axes diverted respectively by the deflector and perspector during the first arrangement and the second arrangement have a first intersection point (the first convergence point) seen from the photosensitive element upstream of the perspector,
wherein the motion devices are arranged in such a way that the deflector and/or the perspector for positioning in the first arrangement and in the second arrangement are moved in at least one direction, rotate in particular two or three space directions as well as around at least one axis, in particular two axes and the deflector for positioning in steps c and e can rotate around at least one axis, in particular two axes,
**characterised in that** the motion device is installed in such a way that a first of the elements perspector and deflector can be moved and pivoted and/or tilted along an approximately elliptical path and/or ellipsoidal surface or a tangent to such a surface and/or path, wherein the second of the elements perspector and deflector is arranged in a first focal point of the elliptical path and/or ellipsoidal surface and the converging point is located in the other focal point.

7. The device according to claim 6, **characterised in that** the movement device for three-dimensional tilting of the deflector and/or perspector are/is arranged about a point, in particular a focal point, of the deflector or respectively of the perspector or around the optical centre of the deflector or perspector.

8. The method according to one of the claims 6 to 7, **characterised in** wherein the motion devices are arranged in such a way that the deflector and the perspector in a third arrangement and in a fourth arrangement can be positioned so that the optical axis after diversion through the deflector and perspector in the third and fourth arrangements have a second intersection point (second converging point); seen from the photosensitive element situated upstream of the perspector, which does not coincide with the first intersection point (the first convergence point) in its position relative to the photosensitive element, wherein the motion devices are arranged in such a way that the deflector and the perspector in the third arrangement and the fourth arrangement can be respectively positioned in such a way that the light striking the perspector is diverted from the object to be recorded or the scenery to be recorded in such a way that it hits the deflector and is diverted from there in direction of the photosensitive element and towards the latter wherein the motion devices are arranged in such a way that the deflector and the perspector can be positioned in such a way that during the third arrangement and the fourth arrangement from the object to be recorded or the scenery to be recorded (14) the light striking the perspector is diverted from the respective object points in different directions (microperspective) to the deflector, then from the latter to the photosensitive element.

9. The device according to claim 6 or 7 and claim 8, **characterised in that** the elliptical path or the ellipsoidal surface is changed when shifting the convergent point.

10. A method for moving the converging point in stereoscopic recordings with a stereoscopic camera having at least two optical axes, especially situated against each other which are tilted or tiltable, that they have an intersection point whereas the optical axes lead to one, in particular to each photosensitive element used for recordings,
a. providing at least one deflector, in particular one deflector per optical axis, and providing at least one perspector, especially at least one perspector per optical axis, wherein said at least one deflector and said at least one perspector are movable for changing the deflection of the light;
b. positioning the deflector and the perspector so that the light striking the perspector is diverted from the object to be recorded or the scenery to be diverted in such a way that it impinges on the deflector and from there in the direction of a first of the in particular at least two photosensitive elements and diverted towards the latter;
c. performing at least a first recording with the first photosensitive element;
d. positioning the deflector and positioning the perspector so that the light striking the perspector is diverted from the object to be recorded or the scenery to be diverted in such a way that it impinges on the selected deflector and from there in the direction of in particular a second of the photosensitive elements and diverted towards the latter and
e. performing at least one first recording with the second photosensitive element, wherein the positioning takes place in such a way that in the second recording of the object to be recorded or the scenery to be recorded, the light emitted from the perspector is diverted to the deflector from the respective object points in a different direction (second micro-perspective) and is diverted from the latter to the photosensitive element as in the first recording (first microperspective), .
wherein the optical axis after deflection through a deflector and perspector during the first two recordings made, have a first intersection point (the first convergence point),
**characterised in that**
the steps b) to e) are repeated after performing at least two first recordings, wherein the optical axis after deflection through a deflector and perspector during the second recording then made, have a second intersection point (the second convergence point), which does not coincide relatively seen from the photosensitive element, in particular the photosensitive elements, with the first intersection point (the first convergence point).

11. The use of the relocation of the convergence point during the recording with a recording device relative to the recording device when creating images, in particular video or film, where the convergence point follows the movement of a moving in the frame object follows and/or switches back and forth between two objects.

12. A method for three-dimensional rendering of virtual arrangements, wherein the convergence point of the optical axes does not match in different consecutive frames.

13. The method of claim 12, wherein using at least one parameter used when carrying a rendering method according to one of the claims 1 to 5 and/or employing a device according to one of the claims 6 to 9.

14. A method for reproducing images, in particular video or film material, to produce a three-dimensional impression, where within the latency time of the human perception apparatus, at least one image of an object or a scene are presented to one or both human eyes from different microperspectives with a common convergence point.

## Revendications

1. Procédé pour enregistrer des objets et des scènes en trois dimensions comprenant les étapes suivantes:
a) fourniture d'une caméra optique avec une lentille (2) ayant un axe optique et un élément photosensible (1) disposé dans un trajet de faisceau optique derrière la lentille (2) pour l'enregistrement d'images (14) ;
b) fourniture au moins d'un premier élément (déflecteur) (3) déviant le trajet du faisceau (5) de lumière incidente et au moins un second élément (perspecteur) (4) de déviation du trajet optique de la lumière incidente (4), où le déflecteur (3) et le perspecteur (4) sont mobiles pour modifier la déviation de la lumière ;
c) positionnement du déflecteur (3) et positionnement du perspecteur (4) de sorte que la lumière frappant le perspecteur (4) soit déviée par l'objet à enregistrer ou la scène (14) à enregistrer de telle manière qu'elle frappe le déflecteur (3) et de là soit déviée dans la direction de l'élément photosensible (1) et vers celui-ci (première microperspective),
d) réalisation d'au moins un premier enregistrement sur l'élément photosensible (1);
e) positionnement du déflecteur (3) et positionnement du perspecteur (4) de sorte que la lumière frappant le perspecteur (4) soit déviée par l'objet à enregistrer ou la scène (14) à enregistrer de telle manière qu'elle frappe le déflecteur (3) et de là soit déviée dans la direction de l'élément photosensible (1) et vers celui-ci (première microperspective) et
f) réalisation d'un second enregistrement sur l'élément photosensible (1), où le positionnement dans l'étape e) est tel que, pendant le deuxième enregistrement de l'objet à enregistrer ou de la scène à enregistrer (14), la lumière est déviée du perspector (4) vers le déflecteur (3) à partir des points d'objet respectifs dans une direction différente (deuxième microperspective) et est déviée à partir de celui-ci vers l'élément photosensible (1) pendant le premier enregistrement (première microperspective)
où les axes optiques déviés respectivement par le déflecteur (3) et le perspecteur (4) pendant le premier enregistrement et le deuxième enregistrement présentent un premier point d'intersection (premier point de convergence) (6) vu de l'élément photosensible (1) en amont du perspecteur (4),
où le perspecteur (4) pour le positionnement dans les étapes c et e est mobile latéralement dans au moins une direction, en particulier deux ou trois directions de l'espace, en tournant aussi bien autour d'au moins un axe, notamment trois axes et le déflecteur (3) pour le positionnement dans les étapes c et e est mis en rotation autour d'au moins un axe, en particulier deux axes, **caractérisé en ce qu'**un premier des éléments que sont le perspecteur (4) et le déflecteur (3), est positionné, pivoté et/ou incliné, en se déplaçant le long d'une trajectoire sensiblement elliptique (7) et/ou de la surface ellipsoïdale (15) ou une tangente à une telle bande ou surface, où le deuxième des éléments que sont le perspecteur (4) et le déflecteur (3) est disposé dans un premier point focal de la trajectoire elliptique (7) et/ou de la surface ellipsoïdale (15) et le point de convergence (6) est situé dans l'autre point focal.

2. Procédé selon la revendication 1, **caractérisé en ce que** la longueur de trajet optique à partir du premier point de convergence vers l'élément photosensible pendant le premier enregistrement et le second enregistrement est à peu près égale, en particulier ne fluctue pas de plus de 3%, en particulier pas plus de 1%.

3. Procédé selon l'une quelconque des revendications précédentes, **caractérisé en ce qu'**au moins un miroir, au moins une lentille et/ou au moins un prisme est utilisé comme perspector et/ou déflecteur.

4. Procédé selon l'une quelconque des revendications précédentes, **caractérisé en ce qu'**après avoir effectué au moins un premier et un second enregistrement, les étapes c) à f) sont répétées, où l'axe optique après déviation par un déflecteur et un perspecteur durant les premier et deuxième enregistrements effectués, ont un second point d'intersection (deuxième point de convergence), qui ne coïncide pas avec le premier point d'intersection (premier point de convergence) dans sa position par rapport à l'élément photosensible.

5. Procédé selon la revendication 4 et la revendication 3, où le trajet elliptique ou l'ellipsoïde est modifié en fonction du déplacement du point de convergence.

6. Dispositif d'enregistrement des objets et des scènes en trois dimensions comprenant:
- une caméra optique avec une lentille ayant un axe optique et un élément photosensible disposé dans un trajet de faisceau optique derrière la lentille pour l'enregistrement d'images;
- au moins d'un premier élément déviant le trajet du faisceau de lumière incidente (déflecteur) et au moins un second élément de déviation du trajet optique de la lumière incidente (perspecteur), où le déflecteur et au moins un perspecteur sont couplés, pour modifier la déviation de la lumière, ayant chacun un dispositif de mouvement ;
dans lequel les dispositifs de mouvement sont agencés de manière à ce que le déflecteur et le perspecteur puissent être positionnés dans une première configuration de sorte que la lumière frappant le perspecteur soit déviée de celui-ci par l'objet à enregistrer ou la scène (14) à enregistrer de manière à frapper le déflecteur et soit déviée à partir de ce point dans la direction de l'élément photosensible et vers celui-ci;
où les dispositifs de mouvement sont agencés de manière à ce que le déflecteur et le perspecteur puissent être positionnées dans une deuxième configuration dans laquelle la lumière frappant le perspecteur est déviée par l'objet à enregistrer ou la scène (14) à enregistrer de manière pourfrapper le déflecteur et être déviée à partir de ce point dans la direction de l'élément photosensible;
où les dispositifs de mouvement sont agencés de telle manière que le déflecteur et le perspecteur puissent être positionnés de telle sorte que, dans la deuxième configuration de l'objet à enregistrer ou de la scène à enregistrer la lumière incidente soit déviée à partir des points respectifs de l'objet dans une direction différente (deuxième microperspective), du perspecteur vers le déflecteur et soit déviée de celle-ci vers l'élément photosensible comme dans la première configuration (premier microperspective) où les axes optiques déviés respectivement par le déflecteur et le perspecteur dans la première configuration et la seconde configuration présente un premier point d'intersection (premier point de convergence) vu de l'élément photosensible en amont du perspecteur,
où les dispositifs de mouvement sont agencés de telle manière que le déflecteur et/ou le perspecteur pour le positionnement dans la première configuration et la deuxième configuration soient mobiles dans au moins une direction, tournent en particulier dans deux ou trois directions de l'espace, de même qu'autour au moins un axe, notamment deux axes et où le déflecteur de positionnement dans les étapes c et e peut tourner autour d'au moins un axe, en particulier deux axes,
**caractérisé en ce que** le dispositif de mouvement est installé de telle manière qu'un premier des éléments que sont le perspecteur et le déflecteur est positionné, pivoté et/ou incliné, en se déplaçant le long d'un trajet sensiblement elliptique et/ou de la surface ellipsoïdale ou d'une tangente à une telle surface et/ou un tel trajet, où le deuxième des éléments que sont le perspecteur et le déflecteur est disposé dans un premier point focal du trajet elliptique et/ou de la surface ellipsoïdale et le point de convergence est situé dans l'autre point focal.

7. Dispositif selon la revendication 6, **caractérisé en ce que** le dispositif de déplacement pour le basculement à trois dimensions du déflecteur et/ou du perspecteur sont (est) agencés autour d'un point, en particulier d'un point focal, du déflecteur ou respectivement du perspecteur ou autour du centre optique du déflecteur ou du perspecteur.

8. Procédé selon l'une quelconque des revendications 6 à 7, **caractérisé en ce que** les dispositifs de déplacement sont agencés de manière à ce que le déflecteur et le perspecteur puissent être disposés dans une troisième configuration et dans une quatrième configuration, pour que l'axe optique après déviation par le déflecteur et le perspecteur dans la troisième configuration et la quatrième configuration présente un second point d'intersection (deuxième point de convergence), vu de l'élément photosensible en amont du perspecteur, dont la position ne coïncide pas avec le premier point d'intersection (premier point de convergence) par rapport à l'élément photosensible, où les dispositifs de mouvement sont agencés de manière à ce que le déflecteur et le perspecteur puissent être positionnés dans la troisième configuration et la quatrième configuration pour que la lumière frappant le perspecteur soit déviée de celui-ci, à partir de l'objet à enregistrer ou de la scène à enregistrer, pour frapper le déflecteur et être déviée à partir de celui-ci en direction de l'élément photosensible et vers celui-ci, où les dispositifs de mouvement sont agencés de manière pour que le déflecteur et le perspecteur puissent être positionnés d'une manière telle que, dans la troisième configuration et la quatrième configuration de l'objet à enregistrer ou à la scène à enregistrer (14), la lumière frappant le perspecteur soit déviée à partir des points respectifs de l'objet dans différentes directions (microperspective) sur le déflecteur, puis de celui-ci vers l'élément photosensible.

9. Dispositif selon la revendication 6 ou 7 et revendication 8, **caractérisé en ce que** le trajet elliptique ou la surface ellipsoïdale est modifié lors du changement du point de convergence.

10. Procédé pour déplacer le point de convergence dans des enregistrements stéréoscopiques avec une caméra stéréoscopique comportant au moins deux axes optiques, en particulier situés l'un contre l'autre, qui sont inclinés ou inclinables de telle sorte, qu'ils ont un point d'intersection, tandis que les axes optiques conduisent à un, en particulier à chaque élément photosensible utilisé pour les enregistrements,
a. fourniture d'au moins un déflecteur, notamment un déflecteur par axe optique, et fourniture d'au moins un perspecteur, en particulier au moins un perspecteur par axe optique, où ledit au moins un déflecteur et ledit au moins un perspecteur sont mobiles pour modifier la déviation de la lumière ;
b. Positionnement du déflecteur et du perspecteur de sorte que la lumière frappant la perspecteur est déviée, à partir de l'objet à enregistrer ou de la scène à enregistrer, pour frapper le déflecteur et de là parte dans la direction d'un premier des éléments photosensibles, en particulier au moins deux éléments photosensibles et déviés vers ces derniers ;
c. réalisation d'au moins un premier enregistrement avec le premier élément photosensible ;
d. positionnement du déflecteur et du perspecteur de sorte que la lumière frappant le perspecteur soit déviée de celui-ci, à partir de l'objet à enregistrer ou de la scène à enregistrer, pour frapper le déflecteur sélectionné et de là parte dans la direction d'un élément photosensible, en particulier au moins deux éléments photosensibles et déviés vers ces derniers et
e. réalisation d'au moins un premier enregistrement avec le deuxième élément photosensible, où le positionnement se produit de telle manière que, pendant le deuxième enregistrement de l'objet à enregistrer ou de la scène à enregistrer, la lumière émise soit déviée du perspecteur sur le déflecteur, à partir des points respectifs de l'objet dans une direction différente (deuxième microperspective), puis déviée à partir de celui-ci vers l'élément photosensible comme lors du premier enregistrement (premier microperspective),
où l'axe optique après déviation à travers un déflecteur et un perspecteur lors du premier et du deuxième enregistrements effectués, ont un premier point d'intersection (première point de convergence),
**caractérisé en ce que**
les phases b) à e) sont répétées après la réalisation d'au moins deux premiers enregistrements, où lequel l'axe optique après déviation par un déflecteur et un perspecteur durant le deuxième enregistrement effectué, ont un second point d'intersection (second point de convergence), qui, vu de l'élément photosensible, en particulier les éléments photosensibles, ne coïncide pas avec le premier point d'intersection (premier point de convergence).

11. Utilisation de la relocalisation du point de convergence lors de l'enregistrement d'un dispositif d'enregistrement par rapport au dispositif d'enregistrement lors de la création d'images, de vidéo ou de film en particulier, où le point de convergence suit le mouvement d'un objet dans trame et/ou effectue un va-et-vient entre deux objets.

12. Procédé de rendu en trois dimensions des configurations virtuelles, où le point de convergence des axes optiques ne correspond pas à différentes trames consécutives.

13. Procédé selon la revendication 12, un procédé selon l'une quelconque des revendications 1 à 5 et/ou l'on exploite un dispositif selon l'une quelconque des revendications 6 à 9, en utilisant au moins un paramètre utilisé lors du rendu on réalise.

14. Procédé de reproduction d'images, en particulier un matériau vidéo ou d'un film, afin de produire une impression en trois dimensions, où à l'intérieur du temps de latence de l'appareil de la perception humaine, au moins une image d'un objet ou d'une scène est présenté à un oeil ou aux deux yeux à partir de différents microperspectives avec un point commun de convergence.
